# EUROPEAN PATENT APPLICATION

(11) **EP 4 124 834 A1**
(43) Date of publication of application: **01.02.2023**
(21) Application number: 22185466.4
(22) Date of filing: 18.07.2022
(51) Int. Cl.: G01D 5/353

(54) **OPTICAL FIBER CHARACTERISTICS MEASUREMENT SYSTEM**

(30) Priority: 29.07.2021 JP 2021124277
(71) Applicant: Yokogawa Electric Corporation, Musashino-shi Tokyo 180-8750 (JP)
(72) Inventor: Yoshihiro, KUMAGAI, Musashino-shi, Tokyo, 180-8750 (JP)
(74) Representative: Winter, Brandl - Partnerschaft mbB

(57) **Abstract**

An optical fiber characteristics measurement system includes: an optical fiber characteristics measurement device including: an emission port configured to emit probe light; and an incidence and emission port connected to one end of a measurement target optical fiber and configured to emit pump light, stimulated Brillouin scattered light generated within the measurement target optical fiber being incident on the incidence and emission port; a first optical fiber having one end connected to the emission port and configured to guide the probe light to another end of the measurement target optical fiber; and an optical isolator provided between another end of the first optical fiber and the another end of the measurement target optical fiber, and configured to cause the probe light guided by the first optical fiber to be incident on the another end of the measurement target optical fiber.

## Description

### Field of the Invention

The present invention relates to an optical fiber characteristics measurement system.

### BACKGROUND

A spectrum (frequencies over which a power level of a spectrum is a maximum) of Brillouin scattered light generated by light being incident on an optical fiber changes due to change in temperature and distortion of the optical fiber. An optical fiber characteristics measurement device using such a property detects a change in frequency of Brillouin scattered light (Brillouin frequency shift (BFS)) over a length direction of the optical fiber, thereby measuring a temperature distribution or distortion distribution in the length direction of the optical fiber.

One of such optical fiber characteristics measurement devices is a Brillouin optical correlation domain analysis (BOCDA) type optical fiber characteristics measurement device disclosed in Japanese Patent No. 6791218 and Japanese Patent No. 5522063. In the BOCDA type optical fiber characteristics measurement device, frequency-modulated light (pump light and probe light) is incident from both ends of an optical fiber. The optical fiber characteristics measurement device measures characteristics of the optical fiber by using a property that the probe light is amplified by a stimulated Brillouin scattering phenomenon at a position at which modulation phases of the pump light and the probe light match (a position at which a "correlation peak" appears).

Incidentally, an optical fiber characteristics measurement device cannot measure characteristics of an optical fiber whose length is larger than a maximum measurement length (a maximum length of the optical fiber whose characteristics can be measured) specified in a specification. In the BOCDA type optical fiber characteristics measurement device described above, it is necessary for both ends of the optical fiber laid on a measurement target object (a measurement target optical fiber) to be connected to the optical fiber characteristics measurement device, and for the frequency-modulated light to be incident from both the ends of the measurement target optical fiber. Therefore, the BOCDA type optical fiber characteristics measurement device basically has a problem that the BOCDA type optical fiber characteristics measurement device cannot measure a measurement target object located farther away than half the maximum measurement length in a straight distance. The measurement target object is, for example, an object that is a measurement target for a temperature distribution or distortion distribution, such as a structure such as a bridge, or an airplane.

Here, in Japanese Patent No. 5522063, a remote station is provided in addition to a base station, and both ends of the measurement target optical fiber are connected to the remote station, so that the measurement target object present in a remote place can be measured. Therefore, when the technology disclosed in Japanese Patent No. 5522063 is used, it is considered that it is possible to measure a measurement target object located farther away than half the maximum measurement length in a straight distance from a base station (optical fiber characteristics measurement device).

However, in Japanese Patent No. 5522063, because it is necessary to transmit the pump light and the probe light to be incident on both ends of the measurement target optical fiber from the base station to the remote station by using a polarization holding fiber with different polarization states, there is a problem that the cost increases. Further, because a distance between the base station and the remote station is limited (for example, limited to about 1 km) due to an influence of polarization crosstalk (extinction ratio), there is a problem that applications are limited.

### SUMMARY

In order to solve the above problem, an optical fiber characteristics measurement system (1, and 1A to 1C) according to a first aspect of the present invention may include: an optical fiber characteristics measurement device (10) including: an emission port (P11) configured to emit probe light (L1); and an incidence and emission port (P12) connected to one end (E1) of a measurement target optical fiber (FUT) and configured to emit pump light (L2), stimulated Brillouin scattered light (BR) generated within the measurement target optical fiber being incident on the incidence and emission port (P12); a first optical fiber (20) having one end (E11) connected to the emission port and configured to guide the probe light to another end (E2) of the measurement target optical fiber; and an optical isolator (30) provided between another end (E12) of the first optical fiber and the another end of the measurement target optical fiber, and configured to cause the probe light guided by the first optical fiber to be incident on the another end of the measurement target optical fiber.

Further, the optical fiber characteristics measurement system according to the first aspect of the present invention, wherein the optical isolator is disposed so that an optical path length from the optical isolator to the another end of the measurement target optical fiber is smaller than an optical path length from the one end of the first optical fiber to the optical isolator.

Further, the optical fiber characteristics measurement system according to the first aspect of the present invention, wherein the optical isolator is disposed at a position at which a correlation peak between the probe light and the pump light is not generated between the optical isolator and the another end of the measurement target optical fiber.

Further, the optical fiber characteristics measurement system according to the first aspect of the present invention, wherein the measurement target optical fiber and the first optical fiber are realized by using one plural core fiber (60) or one multi core fiber.

Further, the optical fiber characteristics measurement system according to the first aspect of the present invention may further include an optical amplifier (70A) configured to amplify the probe light guided by the first optical fiber.

Further, the optical fiber characteristics measurement system according to the first aspect of the present invention may further include a cable (CB) configured to connect the optical fiber characteristics measurement device to the optical amplifier, wherein the optical fiber characteristics measurement device supplies power to the optical amplifier via the cable and transmits a control signal to the optical amplifier via the cable.

Further, the optical fiber characteristics measurement system according to the first aspect of the present invention, wherein power from an external power supply is supplied to the optical amplifier, and wherein the optical fiber characteristics measurement device transmits a control signal to the optical amplifier using a radio signal.

In order to solve the above problem, an optical fiber characteristics measurement system (2, and 2A to 2C) according to a second aspect of the present invention may include: an optical fiber characteristics measurement device (10A) including: a first emission port (P11) connected to one end (E1) of a measurement target optical fiber (FUT) and configured to emit probe light (L1); a second emission port (P13) configured to emit pump light (L2); and an incidence port (P14) on which stimulated Brillouin scattered light (BR) generated within the measurement target optical fiber is incident; a second optical fiber (40A) having one end (E21) connected to the second emission port and configured to guide the pump light toward another end (E2) of the measurement target optical fiber; a third optical fiber (40B) having one end (E31) connected to the incidence port and configured to guide the stimulated Brillouin scattered light generated within the measurement target optical fiber to the incidence port; and an optical circulator (50) configured to cause the pump light guided by the second optical fiber to be incident on the another end of the measurement target optical fiber, and cause the stimulated Brillouin scattered light emitted from the another end of the measurement target optical fiber to be incident on another end (E32) of the third optical fiber.

Further, the optical fiber characteristics measurement system according to the second aspect of the present invention, wherein the optical circulator is disposed so that an optical path length from the optical circulator to the another end of the measurement target optical fiber is smaller than an optical path length from the one end of the second optical fiber to the optical circulator.

Further, the optical fiber characteristics measurement system according to the second aspect of the present invention, wherein the optical circulator is disposed at a position at which a correlation peak between the probe light and the pump light is not generated between the optical circulator and the another end of the measurement target optical fiber.

Further, the optical fiber characteristics measurement system according to the second aspect of the present invention, wherein the measurement target optical fiber, the second optical fiber, and the third optical fiber are realized by using one plural core fiber (60A) or one multi core fiber.

Further, the optical fiber characteristics measurement system according to the second aspect of the present invention may further include an optical amplifier (70B) configured to amplify the pump light guided by the second optical fiber.

Further, the optical fiber characteristics measurement system according to the second aspect of the present invention may further include a cable (CB) configured to connect the optical fiber characteristics measurement device to the optical amplifier, wherein the optical fiber characteristics measurement device supplies power to the optical amplifier via the cable and transmits a control signal to the optical amplifier via the cable.

Further, the optical fiber characteristics measurement system according to the second aspect of the present invention, wherein power from an external power supply is supplied to the optical amplifier, and wherein the optical fiber characteristics measurement device transmits a control signal to the optical amplifier using a radio signal.

In order to solve the above problem, the optical fiber characteristics measurement system (3, and 3A to 3C) according to a third aspect of the present invention may include: an optical fiber characteristics measurement device (10B) including: a first emission port (P11) configured to emit probe light (L1); a second emission port (P13) configured to emit pump light (L2); and an incidence port (P14) to which stimulated Brillouin scattered light (BR) generated within a measurement target optical fiber (FUT) is incident; a first optical fiber (20) having one end (E11) connected to the first emission port and configured to guide the probe light toward one end (E1) of the measurement target optical fiber; an optical isolator (30) provided between another end (E12) of the first optical fiber and one end of the measurement target optical fiber, and configured to cause the probe light guided by the first optical fiber to be incident on the one end of the measurement target optical fiber; a second optical fiber (40A) having one end (E21) connected to the second emission port and configured to guide the pump light toward another end (E2) of the measurement target optical fiber; a third optical fiber (40B) having one end (E31) connected to the incidence port and configured to guide stimulated Brillouin scattered light generated within the measurement target optical fiber to the incidence port; and an optical circulator (50) configured to cause the pump light guided by the second optical fiber to be incident on the another end of the measurement target optical fiber, and cause the stimulated Brillouin scattered light emitted from the another end of the measurement target optical fiber to be incident on another end (E32) of the third optical fiber.

Further, the optical fiber characteristics measurement system according to the third aspect of the present invention, wherein the optical isolator is disposed so that an optical path length from the optical isolator to the one end of the measurement target optical fiber is smaller than an optical path length from the one end of the first optical fiber to the optical isolator, and wherein the optical circulator is disposed so that an optical path length from the optical circulator to the another end of the measurement target optical fiber is smaller than an optical path length from the one end of the second optical fiber to the optical circulator.

Further, the optical fiber characteristics measurement system according to the third aspect of the present invention, wherein the optical isolator is disposed at a position at which a correlation peak between the probe light and the pump light is not generated between the optical isolator and the one end of the measurement target optical fiber, and wherein the optical circulator is disposed at a position at which a correlation peak between the probe light and the pump light is not generated between the optical circulator and the another end of the measurement target optical fiber.

Further, the optical fiber characteristics measurement system according to the third aspect of the present invention, wherein the first optical fiber, the second optical fiber, and the third optical fiber are realized by using one plural core fiber (60B) or one multi core fiber.

Further, the optical fiber characteristics measurement system according to the third aspect of the present invention may further include: a first optical amplifier (70A) configured to amplify the probe light guided by the first optical fiber; and a second optical amplifier (70B) configured to amplify the pump light guided by the second optical fiber.

Further, the optical fiber characteristics measurement system according to the third aspect of the present invention may further include a cable (CB) configured to connect the optical fiber characteristics measurement device to the first optical amplifier and the second optical amplifier, wherein the optical fiber characteristics measurement device supplies power to the first optical amplifier and the second optical amplifier via the cable and transmits a control signal to the first optical amplifier and the second optical amplifier via the cable.

Further, the optical fiber characteristics measurement system according to the third aspect of the present invention, wherein power from an external power supply is supplied to the first optical amplifier and the second optical amplifier, and wherein the optical fiber characteristics measurement device transmits a control signal to the first optical amplifier and the second optical amplifier using a radio signal.

Further, the optical fiber characteristics measurement system according to the first to third aspects of the present invention, wherein both the probe light and the pump light are frequency-modulated light.

Further, the optical fiber characteristics measurement system according to the first to third aspects of the present invention, wherein the probe light is continuous light, and the pump light is pulsed light.

In order to solve the above problem, an optical fiber characteristics measurement system (4) according to a fourth aspect of the present invention may include: an optical fiber characteristics measurement device (80) including: a first port (P21) configured to emit pump light (LP) of continuous light or pulsed light; and a second port (P22) on which natural Brillouin scattered light generated within a measurement target optical fiber (FUT) is incident; a second optical fiber (40A) having one end (E21) connected to the first port and configured to guide the pump light to one end (E1) of the measurement target optical fiber; a third optical fiber (40B) having one end (E31) connected to the second port and configured to guide the natural Brillouin scattered light generated within the measurement target optical fiber to the second port; and an optical circulator (50) configured to cause the pump light guided by the second optical fiber to be incident on the one end of the measurement target optical fiber, and cause the natural Brillouin scattered light emitted from the one end of the measurement target optical fiber to be incident on another end (E32) of the third optical fiber.

Further, the optical fiber characteristics measurement system according to the fourth aspect of the present invention, wherein the optical circulator is disposed so that an optical path length from the optical circulator to the one end of the measurement target optical fiber is smaller than an optical path length from the one end of the second optical fiber to the optical circulator.

According to the present invention, there is an effect that it is possible to expand a range in which a measurement target object can be measured as compared with the related art without causing a great increase in cost and with a simple configuration.

Further features and aspects of the present disclosure will become apparent from the following detailed description of exemplary embodiments with reference to the attached drawings.

### BRIEF DESCRIPTION OF THE DRAWINGS

FIG. 1 is a block diagram illustrating an overall configuration of an optical fiber characteristics measurement system according to a first embodiment of the present invention.
FIGS. 2A to 2C are diagrams illustrating a disposition example of a measurement target optical fiber and a measurement target object in the first embodiment of the present invention.
FIG. 3 is a block diagram illustrating a main configuration of the optical fiber characteristics measurement device according to the first embodiment of the present invention.
FIG. 4 is a diagram linearly illustrating, for example, an optical fiber connected to the optical fiber characteristics measurement device in the first embodiment of the present invention.
FIG. 5 is a block diagram illustrating an overall configuration of an optical fiber characteristics measurement system according to a second embodiment of the present invention.
FIG. 6 is a block diagram illustrating a main configuration of an optical fiber characteristics measurement device according to the second embodiment of the present invention.
FIG. 7 is a diagram linearly illustrating, for example, an optical fiber connected to the optical fiber characteristics measurement device in the second embodiment of the present invention.
FIG. 8 is a block diagram illustrating an overall configuration of an optical fiber characteristics measurement system according to a third embodiment of the present invention.
FIG. 9 is a block diagram illustrating a main configuration of the optical fiber characteristics measurement device according to the third embodiment of the present invention.
FIG. 10 is a diagram linearly illustrating, for example, an optical fiber connected to the optical fiber characteristics measurement device in the third embodiment of the present invention.
FIGS. 11A to 11C are diagrams illustrating a first modification example of the optical fiber characteristics measurement system according to the first to third embodiments of the present invention.
FIG. 12A to 12C are diagrams illustrating a second modification example of the optical fiber characteristics measurement system according to the first to third embodiments of the present invention.
FIG. 13A to 13C are diagrams illustrating a third modification example of the optical fiber characteristics measurement system according to the first to third embodiments of the present invention.
FIG. 14 is a block diagram illustrating an overall configuration of an optical fiber characteristics measurement system according to a fourth embodiment of the present invention.
FIG. 15 is a block diagram illustrating a main configuration of the optical fiber characteristics measurement device according to the fourth embodiment of the present invention.

### DETAILED DESCRIPTION OF THE INVENTION

The embodiments of the present invention will be now described herein with reference to illustrative preferred embodiments. Those skilled in the art will recognize that many alternative preferred embodiments can be accomplished using the teaching of the present invention and that the present invention is not limited to the preferred embodiments illustrated herein for explanatory purposes.

An aspect of the present invention is to provide an optical fiber characteristics measurement system capable of expanding a range in which a measurement target object can be measured as compared with the related art without causing a great increase in cost and with a simple configuration.

Hereinafter, optical fiber characteristics measurement systems according to embodiments of the present invention will be described in detail with reference to the drawings. Hereinafter, an overview of the embodiments of the present invention will be described first, and then details of the embodiments of the present invention will be described.

### [Overview]

An embodiment of the present invention makes it possible to expand a range in which a measurement target object can be measured as compared with the related art without causing a great increase in cost and with a simple configuration. Specifically, measurement of a measurement target object located farther away than half a maximum measurement length in a straight distance from the optical fiber characteristics measurement device is performed without causing a great increase in cost and with a simple configuration.

In Japanese Patent No. 6791218, frequency-modulated continuous light (probe light) and pulsed light (pump light) are incident from both ends of the measurement target optical fiber, and stimulated Brillouin scattered light at a position of each of a plurality of correlation peaks appearing in the measurement target optical fiber is generated at different timings. A timing at which the stimulated Brillouin scattered light is received is adjusted so that only the stimulated Brillouin scattered light at a position at which a selected correlation peak appears is extracted.

However, in Japanese Patent No. 6791218, in order to cause the probe light and the pump light to be incident from both ends of the measurement target optical fiber, it is necessary to connect both ends of the measurement target optical fiber to the optical fiber characteristics measurement device. Therefore, it is not possible to measure a measurement target object located farther away than half the maximum measurement length in a straight distance from the optical fiber characteristics measurement device. When the entire measurement target object is located farther away than half the maximum measurement length, it is not possible to perform measurement on the entire measurement target object, and when a part of the measurement target object is located farther away than half the maximum measurement length, it is not possible to perform measurement on the part (first problem).

Examples of a case in which it is necessary to install the optical fiber characteristics measurement device far away from the measurement target object include the following cases.
- A case in which the optical fiber characteristics measurement device cannot be installed near the measurement target object due to an installation environment (temperature, humidity, soft soil, vibration, explosion-proofing, and danger) near the measurement target object.
- A case in which there is no place in which power can be supplied near the measurement target object, or a case in which there is a place in which power can be supplied but a power capacity is limited.
- A case in which the optical fiber characteristics measurement device cannot be installed continuously, and it is difficult to install the optical fiber characteristics measurement device near the measurement target object each time the measurement is performed, due to cost, labor, or the like.
- A case in which the optical fiber characteristics measurement device cannot be installed near the measurement target object continuously for security reasons.

Further, in Japanese Patent No. 6791218, the next pump light cannot be incident until a certain period of time (a time obtained by adding twice a time width of the pump light to a period of time required for the pump light to reciprocate in the measurement target optical fiber) elapses after the pump light is incident on the measurement target optical fiber. Therefore, in order to shorten a measurement time, it is necessary to shorten a length of the measurement target optical fiber as much as possible. However, when the measurement target optical fiber has a useless section on which measurement does not need to be performed (for example, a section from the optical fiber characteristics measurement device to the measurement target object), a length of the measurement target optical fiber becomes larger according to this section, and a measurement time increases (second problem).

Further, in Japanese Patent No. 6791218, pump light incident on the measurement target optical fiber is attenuated due to an inherent transmission loss of the measurement target optical fiber and also attenuated due to transfer of optical power to the probe light due to a stimulated Brillouin scattering phenomenon occurring at each position at which the correlation peak appears. Therefore, an S/N ratio (signal-to-noise ratio) of the pump light decreases from one end (a pump light incidence end) to the other end (a probe light incidence end) of the measurement target optical fiber. Because the S/N ratio of the pump light at the other end of the optical fiber decreases as the length of the measurement target optical fiber becomes larger, a difference in measurement accuracy of temperature or distortion_between one end and the other end of the measurement target optical fiber becomes large (third problem).

Further, when the measurement target optical fiber has a useless section on which measurement does not need to be performed (for example, a section from the optical fiber characteristics measurement device to the measurement target object), power of the pump light is unnecessarily reduced due to the stimulated Brillouin scattering phenomenon that occurs at the position at which the correlation peak appears in that section. Accordingly, because a gain for the probe light decreases in a section in which measurement needs to be performed (for example, a section in which the measurement target optical fiber is laid on the measurement target object) and the S/N ratio decreases, the measurement accuracy of the temperature or distortion decreases (fourth problem).

Further, when a power intensity of the pump light is high, when a power intensity of the probe light is high, or when the power intensities of both the pump light and the lobe light are high, the pump light or the probe light is attenuated in excess of attenuation due to an inherent transmission loss of the measurement target optical fiber when the pump light or the probe light propagates in the measurement target optical fiber. This is because, when a power intensity of light incident on the optical fiber is high, the stimulated Brillouin scattering phenomenon occurs due to an interaction with its own return light (scattered light) while the light is propagating in the optical fiber, and optical power is transferred to its own return light. Because an S/N ratio decreases when such attenuation occurs, the measurement accuracy of the temperature or distortion decreases (fifth problem).

Here, in the optical fiber characteristics measurement device, because the S/N ratio increases as the power intensity of the pump light and the probe light becomes higher, improvement of the measurement accuracy of the temperature or distortion can be expected. However, because the measurement accuracy is degraded due to the stimulated Brillouin scattering phenomenon when the power intensity of the pump light and the probe light is too high, it is necessary to adjust the power intensity of the pump light and the probe light so that the stimulated Brillouin scattering phenomenon does not occur.

The first problem described above is also a problem that can be said about a Brillouin optical time domain analysis (BOTDA) type optical fiber characteristics measurement device. The second problem described above is a problem that can be said with respect to a BOTDA type optical fiber characteristics measurement device, a Brillouin optical time domain reflectometry (BOTDR) type optical fiber characteristics measurement device, and a Brillouin optical correlation domain reflectometry (BOCDR) type optical fiber characteristics measurement device in that the measurement time is increased. The third and fourth problems described above are problems that can be said with respect to a BOTDA type optical fiber characteristics measurement device. In the case of BOTDA, an optical power level of the pump light decreases due to the transfer of optical power to the probe light due to the stimulated Brillouin scattering phenomenon at all positions of a measurement target fiber. The third problem described above is a problem that can be said about a BOTDR type optical fiber characteristics measurement device and a BOCDR type optical fiber characteristics measurement device. A difference in measurement accuracy of the temperature or distortion between a measurement position on the incidence end side and a measurement position on the far end side of the measurement target optical fiber is increased due to transmission loss when the measurement length is larger, even though the increase is not influenced by the stimulated Brillouin scattering phenomenon. The fifth problem described above is a problem that can be said about a BOTDA type optical fiber characteristics measurement device, a BOTDR type optical fiber characteristics measurement device, and a BOCDR type optical fiber characteristics measurement device.

In the above BOTDA type optical fiber characteristics measurement device, the pulsed light (pump light) having a variable frequency is incident from one end of the optical fiber, and probe light that is continuous light is incident from the other end of the optical fiber. Changed components of the probe light due to the stimulated Brillouin scattering phenomenon are sequentially measured to obtain characteristics of the optical fiber.

In the above BOTDR type optical fiber characteristics measurement device, the pulsed light is incident from one end of the optical fiber. The characteristics of the optical fiber are obtained by sequentially detecting natural Brillouin scattered light emitted from the one end of the optical fiber.

In the above BOCDR type optical fiber characteristics measurement device, pump light, which is frequency-modulated continuous light or pulsed light, is incident from one end of the optical fiber, and the natural Brillouin scattered light obtained from the one end of the optical fiber interferes with the reference light. Accordingly, the natural Brillouin scattered light at a specific position at which the "correlation peak" appears in the optical fiber is selectively extracted and the characteristics of the optical fiber are obtained.

In Japanese Patent No. 5522063, the remote station is provided in addition to the base station, and both ends of the measurement target optical fiber are connected to the remote station, so that a measurement target object present in a remote place can be measured. Therefore, when the technology disclosed in Japanese Patent No. 5522063 is used, it is considered that it is possible to measure a measurement target object located farther away than half the maximum measurement length in a straight distance from a base station (optical fiber characteristics measurement device).

However, in Japanese Patent No. 5522063, it is necessary to transmit the pump light and the probe light incident on both ends of the measurement target optical fiber from the base station to the remote station by using a polarization holding fiber with different polarization states. Here, because a polarization holding fiber is generally more expensive than a normal single-mode fiber, there is a concern that a cost of the entire system will increase. Further, although the polarization holding fiber has a high polarization holding capability, an influence of a polarization crosstalk becomes great when a length of the polarization holding fiber increases because coupling between polarization modes is not zero. Then, because the distance between the base station and the remote station is limited (for example, limited to about 1 km), applications are limited.

Further, in Japanese Patent No. 5522063, in the base station, a polarization controller that controls the polarization state of the pump light, and a synthesis means that synthesizes the pump light with the probe light are required. Further, in the remote station, a separation means that separates the pump light and the probe light, and a polarization controller that controls the polarization state of the pump light are required. Thus, in Japanese Patent No. 5522063, because the number of parts in the base station and the remote station increases, there is concern that the cost will increase.

Further, in Japanese Patent No. 5522063, it is worthwhile to curb the number of optical fibers connecting the base station to the remote station by using the polarization holding fiber. However, it is considered that it is less worthwhile to curb the number of optical fibers that connect the base station to the remote station using the polarization holding fiber in consideration of the fact that plural core fibers having an outer diameter similar to an outer diameter of the polarization holding fiber are generally sold. Rather, a disadvantage of the limited distance between the base station and the remote station is considered to be greater than an advantage of a reduced number of optical fibers.

In the first embodiment of the present invention, the one end of the measurement target optical fiber is connected to the incidence and emission port of the optical fiber characteristics measurement device, and the pump light emitted from the incidence and emission port is incident on the measurement target optical fiber. Further, one end of the first optical fiber is connected to the emission port of the optical fiber characteristics measurement device, and the probe light emitted from the emission port is guided to the other end of the measurement target optical fiber. The probe light guided by the first optical fiber is incident on the other end of the measurement target optical fiber via an optical isolator, and the stimulated Brillouin scattered light generated by the measurement target optical fiber is incident on the incidence and emission port.

Thus, in the first embodiment of the present invention, only the one end of the measurement target optical fiber to which the pump light is incident needs to be connected to the optical fiber characteristics measurement device, and it is possible to dispose the other end of the measurement target optical fiber to which the probe light is incident, at a position spaced apart from the optical fiber characteristics measurement device. Here, the probe light is guided to the other end of the measurement target optical fiber by the first optical fiber, and is incident on the other end of the measurement target optical fiber via an optical isolator. This makes it possible to expand the range in which the measurement target object can be measured as compared with the related art without causing a great increase in cost and with a simple configuration.

In the second embodiment of the present invention, the one end of the measurement target optical fiber is connected to a first emission port of the optical fiber characteristics measurement device, and the probe light emitted from the first emission port is incident on the measurement target optical fiber. Further, one end of the second optical fiber is connected to the second emission port of the optical fiber characteristics measurement device, and the pump light emitted from the second emission port is guided to the other end of the measurement target optical fiber. Further, a one end of the third optical fiber is connected to the incidence port of the optical fiber characteristics measurement device. The pump light guided by the second optical fiber is incident on the other end of the measurement target optical fiber via the optical circulator, and the stimulated Brillouin scattered light emitted from the other end of the measurement target optical fiber is incident on the other end of the third optical fiber via the optical circulator.

Thus, in the second embodiment of the present invention, only the one end of the measurement target optical fiber to which the probe light is incident needs to be connected to the optical fiber characteristics measurement device, and it is possible to dispose the other end of the measurement target optical fiber, to which the pump light is incident, at a position spaced apart from the optical fiber characteristics measurement device. Here, the pump light is guided to the other end of the measurement target optical fiber by the second optical fiber, and is incident on the other end of the measurement target optical fiber via the optical circulator. Further, the stimulated Brillouin scattered light generated within the measurement target optical fiber passes through the optical circulator, and then, is guided to the optical fiber characteristics measurement device by the third optical fiber. This makes it possible to expand the range in which the measurement target object can be measured as compared with the related art without causing a great increase in cost and with a simple configuration.

In the third embodiment of the present invention, the one end of the first optical fiber is connected to the first emission port of the optical fiber characteristics measurement device, and the probe light emitted from the first emission port is guided to the one end of the measurement target optical fiber. Further, the one end of the second optical fiber is connected to the second emission port of the optical fiber characteristics measurement device, and the pump light emitted from the second emission port is guided to the other end of the measurement target optical fiber. Further, the one end of the third optical fiber is connected to the incidence port of the optical fiber characteristics measurement device. The probe light guided by the first optical fiber is incident on the one end of the measurement target optical fiber via an optical isolator. Further, the pump light guided by the second optical fiber is incident on the other end of the measurement target optical fiber via the optical circulator, and the Brillouin scattered light emitted from the other end of the measurement target optical fiber is incident on the other end of the third optical fiber via the optical circulator.

Thus, in the third embodiment of the present invention, because it is not necessary to connect both ends of the measurement target optical fiber to the optical fiber characteristics measurement device, it is possible to dispose the entire measurement target optical fiber at a position spaced apart from the optical fiber characteristics measurement device. Here, the probe light is guided to the one end of the measurement target optical fiber by the first optical fiber, and is incident on the one end of the measurement target optical fiber via an optical isolator. The pump light is guided to the other end of the measurement target optical fiber by the second optical fiber, and is incident on the other end of the measurement target optical fiber via the optical circulator. The stimulated Brillouin scattered light generated within the measurement target optical fiber passes through the optical circulator, and then, is guided to the optical fiber characteristics measurement device by the third optical fiber. This makes it possible to expand the range in which the measurement target object can be measured as compared with the related art without causing a great increase in cost and with a simple configuration.

In the fourth embodiment of the present invention, the one end of the second optical fiber is connected to a first port of the optical fiber characteristics measurement device, and continuous light or pulsed light emitted from the first port is guided to the one end of the measurement target optical fiber. Further, the one end of the third optical fiber is connected to the second port of the optical fiber characteristics measurement device. The pulsed light guided by the second optical fiber is incident on the one end of the measurement target optical fiber via the optical circulator, and natural Brillouin scattered light emitted from the one end of the measurement target optical fiber is incident on the other end of the third optical fiber via the optical circulator.

Thus, in the fourth embodiment of the present invention, because it is not necessary to connect both ends of the measurement target optical fiber to the optical fiber characteristics measurement device, it is possible to dispose the entire measurement target optical fiber at a position spaced apart from the optical fiber characteristics measurement device. Here, the continuous light or pulsed light is guided to the one end of the measurement target optical fiber by the second optical fiber, and is incident on the one end of the measurement target optical fiber via an optical circulator. The natural Brillouin scattered light generated within the measurement target optical fiber passes through the optical circulator, and then, is guided to the optical fiber characteristics measurement device by the third optical fiber. This makes it possible to expand the range in which the measurement target object can be measured as compared with the related art without causing a great increase in cost and with a simple configuration.

### [First embodiment]

### <Optical fiber characteristics measurement system>

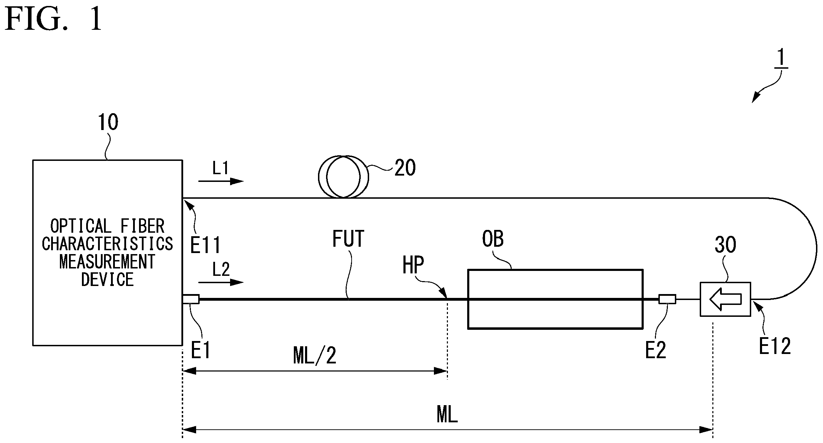

FIG. 1 is a block diagram illustrating an overall configuration of an optical fiber characteristics measurement system according to a first embodiment of the present invention. As illustrated in FIG. 1, the optical fiber characteristics measurement system 1 of the present embodiment includes an optical fiber characteristics measurement device 10, a transmission optical fiber 20 (first optical fiber), and an optical isolator 30. In such an optical fiber characteristics measurement system 1, a measurement target optical fiber FUT is used as a sensor to measure characteristics (for example, a temperature distribution or a distortion distribution) of the measurement target object OB.

Here, the measurement target object OB is, for example, an object that is a measurement target for a temperature distribution or distortion distribution, such as a structure such as a bridge, or an airplane. FIG. 1 illustrates an example in which the measurement target optical fiber FUT is disposed in a straight line for easy understanding, and a part of the measurement target optical fiber FUT is laid on the measurement target object OB. Further, it is assumed that a length of the measurement target optical fiber FUT is larger than half (ML/2) a maximum measurement length ML of the optical fiber characteristics measurement device 10 and smaller than the maximum measurement length ML, as illustrated in FIG. 1.

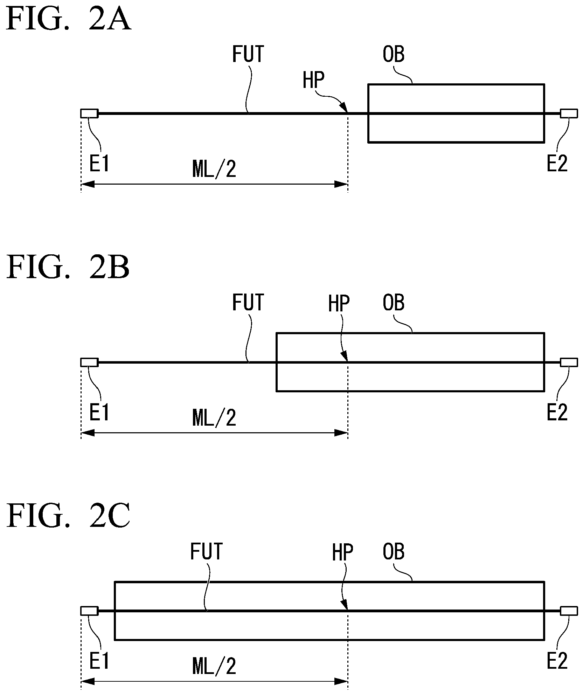

FIGS. 2A to 2C are diagrams illustrating a disposition example of the measurement target optical fiber and the measurement target object in the first embodiment of the present invention. As illustrated in FIG. 2A, the entire measurement target object OB may be disposed farther away than a position at which a distance from one end E1 of the measurement target optical fiber FUT is half (ML/2) a maximum measurement length ML (hereinafter referred to as an "intermediate position HP"). The one end E1 of the measurement target optical fiber FUT is an end connected to the optical fiber characteristics measurement device 10.

Further, a part of the measurement target object OB may be disposed on the side closer to the one end E1 of the measurement target optical fiber FUT than the intermediate position HP, and the remaining part may be disposed farther away than the intermediate position HP, as illustrated in FIG. 2B. Further, the measurement target object OB may be disposed over a total length of the measurement target optical fiber FUT (from the one end E1 to the other end E2 of the measurement target optical fiber FUT), as illustrated in FIG. 2C.

In the measurement target optical fiber FUT, a portion laid on the measurement target object OB is influenced by the measurement target object OB. For example, when a temperature of the measurement target object OB changes, a temperature of the portion of the measurement target optical fiber FUT laid on the measurement target object OB changes. Further, when the measurement target object OB is distorted, the portion of the measurement target optical fiber FUT laid on the measurement target object OB is distorted. When such a change in temperature or distortion of the measurement target optical fiber FUT occurs, the spectrum of the stimulated Brillouin scattered light (a frequency at which a power level of a spectrum is maximized) generated by light being incident on the measurement target optical fiber FUT changes. The optical fiber characteristics measurement system 1 measures the characteristics of the measurement target object OB by detecting such a change in the spectrum of the stimulated Brillouin scattered light.

The optical fiber characteristics measurement device 10 is a so-called BOCDA type optical fiber characteristics measurement device that measures the characteristics of the measurement target optical fiber FUT on the basis of scattered light obtained by causing probe light L1 (continuous light) to be incident from the other end E2 of the measurement target optical fiber FUT and causing the pump light L2 (pulsed light) to be incident from the one end E1 of the measurement target optical fiber FUT. The probe light L1 is laser beam as continuous light to which a predetermined frequency modulation has been applied, and the pump light L2 is light obtained by pulsing the laser beam as continuous light to which the frequency modulation has been applied. Further, the scattered light is scattered light (stimulated Brillouin scattered light) influenced by the stimulated Brillouin scattering phenomenon within the measurement target optical fiber FUT.

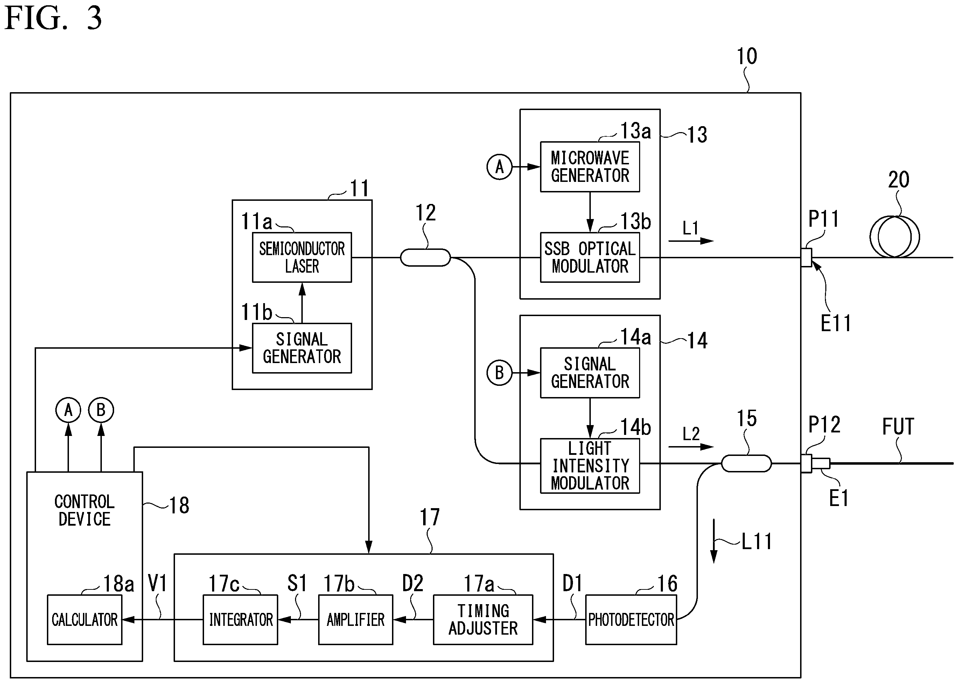

FIG. 3 is a block diagram illustrating a main configuration of the optical fiber characteristics measurement device 10 according to the first embodiment of the present invention. As illustrated in FIG. 3, the optical fiber characteristics measurement device 10 includes a light source 11, an optical branch 12, an optical modulator 13, a pulse modulator 14, a directional coupler 15, a photodetector 16, a detection device 17, a control device 18, an emission port P11, and an incidence and emission port P12, and measures characteristics (for example, a temperature distribution or distortion distribution) in a length direction of the measurement target optical fiber FUT. One end E11 of the transmission optical fiber 20 is connected to the emission port P11, and the one end E1 of the measurement target optical fiber FUT is connected to the incidence and emission port P12. Although omitted here, as shown in FIG. 1, the transmission optical fiber 20 and the measurement target optical fiber FUT are connected to each other via the optical isolator 30.

The light source 11 includes a semiconductor laser 11a and a signal generator 11b, and emits laser beam frequency-modulated at a predetermined modulation frequency fₘ under the control of the control device 18. Here, it is possible to use, for example, a multi-quantum well, distributed feed-back, laser diode (MQW, DFB, LD) that is small and emits laser beam having a narrow spectrum width as the semiconductor laser 11a. The signal generator 11b is controlled by the control device 18 and outputs a sinusoidal signal (modulation signal) for frequency-modulating the laser beam emitted from the semiconductor laser 11a at the modulation frequency fₘ to the semiconductor laser 11a. The optical branch 12 branches the laser beam emitted from the light source 11 into two, for example, at a 1:1 intensity ratio.

The optical modulator 13 includes a microwave generator 13a and a single side band (SSB) optical modulator 13b, and modulates (shifts an optical frequency of) one of the laser beams branched by the optical branch 12 to generate a sideband (single sideband) with respect to a center frequency of the laser beam under the control of the control device 18. In the present embodiment, it is assumed that the single-sided band wave on the low frequency side is output from the optical modulator 13.

The microwave generator 13a is controlled by the control device 18 and outputs a microwave having a frequency corresponding to the frequency shift given to the one of the laser beams branched by the optical branch 12. A frequency of the microwave output from the microwave generator 13a varies under the control of the control device 18. The SSB optical modulator 13b generates a single-sided band wave having a frequency difference equal to the frequency of the microwave output from the microwave generator 13a with respect to the center frequency of the incident light. The light modulated by the optical modulator 13 is emitted from the emission port P11 as the probe light L1 (continuous light).

The pulse modulator 14 includes a signal generator 14a and a light intensity modulator 14b, and pulses the other laser beam branched by the optical branch 12 to generate pulsed light under the control of the control device 18. The signal generator 14a is controlled by the control device 18 and outputs a timing signal that defines a timing at which the laser beam is pulsed. The light intensity modulator 14b is, for example, an electro-optic (EO) switch, and pulses the laser beam from the optical branch 12 at a timing defined by the timing signal that is output from the signal generator 14a.

The directional coupler 15 emits, from the incidence and emission port P12, the pulsed laser beam emitted from the pulse modulator 14 as the pump light L2 (pulsed light). Further, the directional coupler 15 emits light incident from the incidence and emission port P12 (light (detection light L11) including the probe light L1 passing through the measurement target optical fiber FUT) to the photodetector 16. An intensity of the detection light L11 is influenced by the stimulated Brillouin scattering phenomenon that occurs within the measurement target optical fiber FUT.

The photodetector 16 includes a high-sensitivity light reception element such as an avalanche photodiode, and detects (receives) the detection light L11 (light emitted from the other end of the measurement target optical fiber FUT and passing through the directional coupler 15) and outputs a detection signal D1. The detection device 17 includes a timing adjuster 17a, an amplifier 17b, and an integrator 17c, and detects the detection signal D1 output from the photodetector 16 under the control of the control device 18.

The timing adjuster 17a is realized by, for example, an electric switch (high-speed analog switch) capable of switching between an on state (a state in which the detection signal D1 is passed) and an off state (a state in which the detection signal D1 is blocked) at high speed. The on state and the off state of the timing adjuster 17a are controlled by the control device 18, and the detection signal D1 is cut out in units of a predetermined time. Here, the cutout means extracting a necessary part from a signal that is continuous in time.

The amplifier 17b amplifies a detection signal D2 (a detection signal cut out by the timing adjuster 17a) that has passed through the timing adjuster 17a under the control of the control device 18. The integrator 17c integrates an output signal S1 (a signal cut out by the timing adjuster 17a and amplified by the amplifier 17b) output from the amplifier 17b under the control of the control device 18. An integration result of the integrator 17c is converted into a digital signal by an A/D (analog/digital) converter (not illustrated) and output to the control device 18.

The control device 18 performs overall control of an operation of the optical fiber characteristics measurement device 10. For example, the control device 18 controls the signal generator 11b provided in the light source 11 to change the modulation frequency fₘ of the continuous light emitted from the light source 11. Further, the control device 18 controls the microwave generator 13a provided in the optical modulator 13 to change a frequency in a sideband (single sideband) of the probe light L1. Further, the control device 18 controls the signal generator 14a provided in the pulse modulator 14 and controls the timing at which the laser beam branched by the optical branch 12 is pulsed.

Further, the control device 18 controls the timing adjuster 17a, the amplifier 17b, and the integrator 17c provided in the detection device 17 to control cutout of the detection signal D1, a polarity of the detection signal D2, and integral of the output signal S1. Further, the control device 18 includes a calculator 18a. The calculator 18a performs a predetermined calculation on a measurement value V1 output from the detection device 17 (an integral value output from the integrator 17c) to detect the stimulated Brillouin scattered light.

The transmission optical fiber 20 is an optical fiber that guides the probe light L1 emitted from the emission port P11 of the optical fiber characteristics measurement device 10 to the other end E2 of the measurement target optical fiber FUT. In the transmission optical fiber 20, one end E11 is connected to the emission port P11 of the optical fiber characteristics measurement device 10, and the other end E12 is optically coupled to an incidence end of the optical isolator 30. It is possible to use, for example, a single mode fiber as the transmission optical fiber 20.

The optical isolator 30 is provided between the other end E12 of the transmission optical fiber 20 and the other end E2 of the measurement target optical fiber FUT, and causes the probe light L1 guided by the transmission optical fiber 20 to be incident on the other end E2 of the measurement target optical fiber FUT. However, the optical isolator 30 blocks the light emitted from the other end E2 of the measurement target optical fiber FUT and directed to the transmission optical fiber 20. In the optical isolator 30, the incidence end is optically coupled to the other end E12 of the transmission optical fiber 20, and an emission end is optically coupled to the other end E2 of the measurement target optical fiber FUT.

The optical isolator 30 is disposed so that an optical path length from the emission end of the optical isolator 30 to the other end E2 of the measurement target optical fiber FUT is smaller than the optical path length from the one end E11 of the transmission optical fiber 20 to the incidence end of the optical isolator 30. Further, the optical isolator 30 is disposed at a position at which a correlation peak between the probe light L1 and the pump light L2 is not generated between the emission end of the optical isolator 30 and the other end E2 of the measurement target optical fiber FUT. In order to shorten an optical path length of the probe light L1 as much as possible, the other end E12 of the transmission optical fiber 20 may be directly connected to the incidence end of the optical isolator 30, and the other end E2 of the measurement target optical fiber FUT may be directly connected to the emission end of the optical isolator 30.

### <Operation of optical fiber characteristics measurement system>

Next, an operation of the optical fiber characteristics measurement system 1 will be briefly described. When the optical fiber characteristics measurement device 10 is instructed to start measurement, the optical fiber characteristics measurement device 10 performs processing of setting the modulation frequency. Here, it is assumed that a preset initial value is set as the modulation frequency fₘ by the control device 18. When the modulation frequency fₘ is set, the signal generator 11b provided in the light source 11 is controlled by the control device 18, and a sinusoidal signal (modulation signal) is output from the signal generator 11b. When such a sinusoidal signal is input to the semiconductor laser 11a, the laser beam as continuous light frequency-modulated at the modulation frequency fₘ is emitted from the semiconductor laser 11a.

The laser beam emitted from the semiconductor laser 11a is incident on the optical branch 12 and branched into two. One of the laser beams branched by the optical branch 12 is incident on the optical modulator 13 and is modulated by the SSB optical modulator 13b. Accordingly, a sideband (single sideband) with respect to the center frequency of the laser beam is generated. The light modulated by the optical modulator 13 is emitted from the emission port P11 of the optical fiber characteristics measurement device 10 as the probe light L1. The probe light L1 emitted from the emission port P11 of the optical fiber characteristics measurement device 10 is guided to the other end E2 of the measurement target optical fiber FUT by the transmission optical fiber 20. Then, the probe light L1 passes through the optical isolator 30, and then, is incident on the measurement target optical fiber FUT from the other end E2 of the measurement target optical fiber FUT.

On the other hand, the other laser beam branched by the optical branch 12 is pulsed by being incident on the pulse modulator 14 and being intensity-modulated by the light intensity modulator 14b. This pulsed light is emitted from the incidence and emission port P12 of the optical fiber characteristics measurement device 10 as the pump light L2 via the directional coupler 15. The pump light L2 emitted from the incidence and emission port P12 of the optical fiber characteristics measurement device 10 is incident on the measurement target optical fiber FUT from the one end E1 of the measurement target optical fiber FUT.

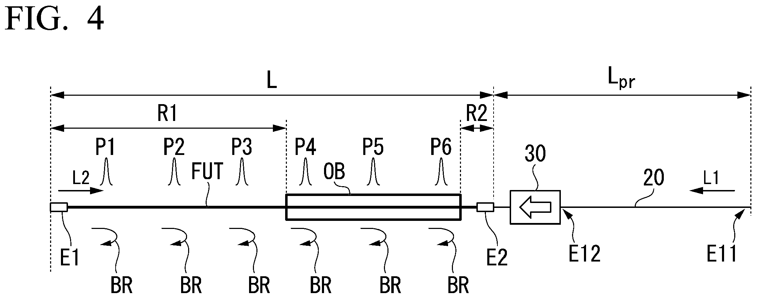

When the probe light L1 as continuous light frequency-modulated at the modulation frequency fₘ and the pump light L2 as pulsed light are incident on the measurement target optical fiber FUT, correlation peaks P1 to P6 (see FIG. 4) appear at different positions in the measurement target optical fiber FUT when the pump light L2 propagates in the measurement target optical fiber FUT. The probe light L1 obtains a gain according to stimulated Brillouin amplification using the pump light L2 at positions of the correlation peaks P1 to P6.

The probe light L1 passing through the measurement target optical fiber FUT and the stimulated Brillouin scattered light BR (see FIG. 4) generated within the measurement target optical fiber FUT are emitted from the one end E1 of the measurement target optical fiber FUT, and then, are incident on the photodetector 16 as the detection light L11 via the directional coupler 15. In the photodetector 16, light in a sideband on the low frequency side is selected and an intensity of the light is detected, and the detection signal D1 indicating a result of the detection is emitted from the photodetector 16. The detection signal D1 output from the photodetector 16 is input to the detection device 17.

When the detection signal D1 is input to the detection device 17, the timing adjuster 17a are switched between an ON state and an OFF state so that a specific portion of the detection signal D1 is passed. The specific portion includes a portion (first portion) that is influenced by the stimulated Brillouin scattered light BR generated at and near a measurement point set for the measurement target optical fiber FUT, and a portion (second portion) obtained during a period in which the stimulated Brillouin scattered light BR cannot be emitted from the measurement target optical fiber FUT. The detection signal D2 output from the timing adjuster 17a is amplified by the amplifier 17b and output as an output signal S1. The output signal S1 output from the amplifier 17b is integrated by the integrator 17c. Accordingly, an integral value (first integral value) in the first portion and the integral value (second integral value) in the second portion can be obtained. When the above processing ends, the calculator 18a of the control device 18 performs processing of detecting the stimulated Brillouin scattered light BR on the basis of the obtained first integral value and the second integral value.

A spectrum of the stimulated Brillouin scattered light BR at the measurement point set for the measurement target optical fiber FUT is obtained by repeating the above processing while sweeping the frequency of the microwave output from the microwave generator 13a under the control of the control device 18. The characteristics (for example, an amount of distortion) of the measurement target optical fiber FUT at the measurement point set for the measurement target optical fiber FUT, for example, can be obtained by detecting the frequency at which a power level of a spectrum is maximized. Further, it is possible to measure the characteristics in a length direction of the measurement target optical fiber FUT by repeating the operation described above while changing a position of the measurement point set in the measurement target optical fiber FUT by changing the modulation frequency fₘ, a cutout timing of the timing adjuster 17a, and an integral range of the integrator 17c.

A basic operation of the optical fiber characteristics measurement device 10 is the same as the operation of the optical fiber characteristics measurement device disclosed in Japanese Patent No. 6791218. However, because the transmission optical fiber 20, in addition to the measurement target optical fiber FUT, is connected to the optical fiber characteristics measurement device 10, a period in which the pump light L2 is incident on the measurement target optical fiber FUT and the cutout timing of the timing adjuster 17a differ.

FIG. 4 is a diagram linearly illustrating, for example, an optical fiber connected to the optical fiber characteristics measurement device 10 in the first embodiment of the present invention. As illustrated in FIG. 4, the transmission optical fiber 20 and the measurement target optical fiber FUT optically coupled to each other via the optical isolator 30 are connected between the emission port P11 and the incidence and emission port P12 of the optical fiber characteristics measurement device 10. The optical isolator 30 is disposed at a position as close as possible to the other end E2 (measurement target object OB) of the measurement target optical fiber FUT.

Specifically, the optical isolator 30 is disposed so that an optical path length from the emission end of the optical isolator 30 to the other end E2 of the measurement target optical fiber FUT is smaller than the optical path length from the one end E11 of the transmission optical fiber 20 to the incidence end of the optical isolator 30, as described above. Further, the optical isolator 30 is disposed at a position at which a correlation peak between the probe light L1 and the pump light L2 is not generated between the emission end of the optical isolator 30 and the other end E2 of the measurement target optical fiber FUT, as described above.

Here, in the measurement target optical fiber FUT, only the one end E1 is connected to the optical fiber characteristics measurement device 10, and the other end E2 is not connected to the optical fiber characteristics measurement device 10. A length L (a measurement length) of the measurement target optical fiber FUT is set to be longer than half (ML/2) the maximum measurement length ML of the optical fiber characteristics measurement device 10 and smaller than the maximum measurement length ML. Therefore, when the measurement target optical fiber FUT extends in a straight line, the other end E2 of the measurement target optical fiber FUT can be disposed farther away than a position (the intermediate position HP: See FIG. 1) in which the distance from the one end E1 is half (ML/2) the maximum measurement length ML. This makes it possible to measure the measurement target object OB located farther away than the intermediate position HP. Further, because the transmission optical fiber 20 and the optical isolator 30 needs only to be provided between the other end E2 of the measurement target optical fiber FUT and the incidence and emission port P12 of the optical fiber characteristics measurement device 10, a great increase in cost is not caused.

Further, the probe light L1 is transmitted by the transmission optical fiber 20 and is incident on the measurement target optical fiber FUT, whereas the pump light L2 is incident on the measurement target optical fiber FUT but is not incident on the transmission optical fiber 20.

Therefore, a period in which the pump light L2 is emitted to the measurement target optical fiber FUT may be determined in consideration of only the length L of the measurement target optical fiber FUT, and it is not necessary to consider a length Lₚᵣ of the transmission optical fiber 20. Specifically, the period in which the pump light L2 is emitted to the measurement target optical fiber FUT may be a time obtained by adding a time that is twice a time width of the pump light L2 to a time required for the pump light L2 to reciprocate in the measurement target optical fiber FUT.

In the related art, it was necessary to consider a total length of the optical fiber (L + Lₚᵣ in the example illustrated in FIG. 4) connected between the emission port P11 and the emission port P12 of the optical fiber characteristics measurement device 10. However, in the present embodiment, because only the length L of the measurement target optical fiber FUT among optical fibers connected between the emission port P11 and the incidence and emission port P12 of the optical fiber characteristics measurement device 10 needs to be considered, it is possible to shorten the measurement time as compared with the related art. In FIG. 4, sections R1 and R2 indicate sections of the measurement target optical fiber FUT on which measurement does not need to be performed.

Further, in the present embodiment, for example, a single mode fiber may be used as the transmission optical fiber 20 for transmitting the probe light L1, and it is not necessary to use the polarization holding fiber as in Japanese Patent No. 5522063. Therefore, a distance over which the probe light L1 is transmitted is not limited (for example, not limited to about 1 km) due to an influence of a polarization crosstalk (extinction ratio).

As described above, in the present embodiment, the one end E1 of the measurement target optical fiber FUT is connected to the incidence and emission port P12 of the optical fiber characteristics measurement device 10, and the pump light L2 emitted from the incidence and emission port P12 is incident on the measurement target optical fiber FUT. Further, the one end E11 of the transmission optical fiber 20 is connected to the emission port P11 of the optical fiber characteristics measurement device 10, and the probe light L1 emitted from the emission port P11 is guided to the other end E2 of the measurement target optical fiber FUT. The probe light L1 guided by the transmission optical fiber 20 is incident on the other end E2 of the measurement target optical fiber FUT via the optical isolator 30, and the stimulated Brillouin scattered light BR generated within the measurement target optical fiber FUT is incident on the incidence and emission port P12.

Thus, in the present embodiment, only the one end E1 of the measurement target optical fiber FUT to which the pump light L2 is incident may be connected to the optical fiber characteristics measurement device 10, and it is possible to dispose the other end E2 of the measurement target optical fiber FUT to which the probe light L1 is incident, at a position spaced apart from the optical fiber characteristics measurement device 10. Here, the probe light L1 is guided to the other end E2 of the measurement target optical fiber FUT by the transmission optical fiber 20, and is incident on the other end E2 of the measurement target optical fiber FUT via the optical isolator 30. This makes it possible to expand the range in which the measurement target object OB can be measured as compared with the related art without causing a great increase in cost and with a simple configuration. Even when the temperature or distortion of the measurement target object OB can be measured using the related art, it is possible to shorten the measurement time by setting the length of the measurement target optical fiber FUT to a length suitable for measurement of the measurement target object OB by using the present embodiment.

### [Second embodiment]

### <Optical fiber characteristics measurement system>

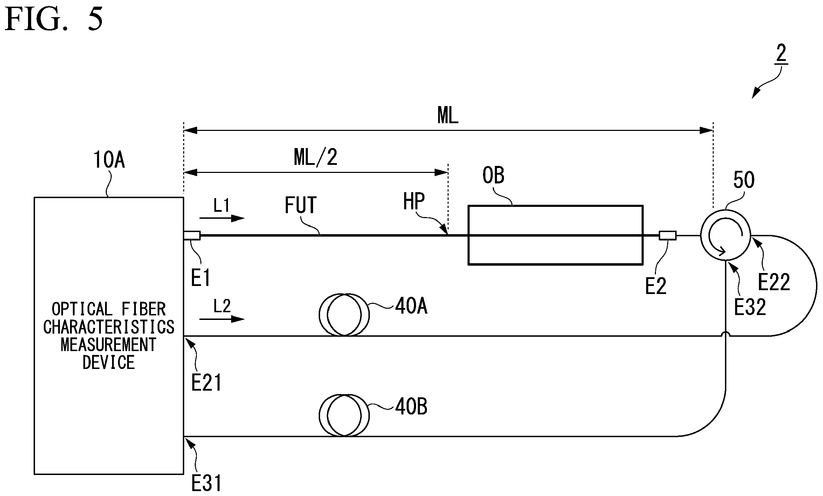

FIG. 5 is a block diagram illustrating an overall configuration of an optical fiber characteristics measurement system according to a second embodiment of the present invention. In FIG. 5, the same components similar to those illustrated in FIG. 1 are denoted by the same reference signs. As illustrated in FIG. 5, an optical fiber characteristics measurement system 2 of the present embodiment includes an optical fiber characteristics measurement device 10A, a transmission optical fiber 40A (second optical fiber), a transmission optical fiber 40B (third optical fiber), and an optical circulator 50. An optical directional coupler (optical coupler) may be provided instead of the optical circulator 50.

In the optical fiber characteristics measurement system 1 illustrated in FIG. 1, the pump light L2 is incident from the one end E1 of the measurement target optical fiber FUT connected to the optical fiber characteristics measurement device 10, and the probe light L1 passing through the transmission optical fiber 20 and the optical isolator 30 is incident from the other end E2 of the measurement target optical fiber FUT. The stimulated Brillouin scattered light BR generated within the measurement target optical fiber FUT is incident on the optical fiber characteristics measurement device 10 from the one end E1 of the measurement target optical fiber FUT.

On the other hand, in the optical fiber characteristics measurement system 2 of the present embodiment, the probe light L1 is incident from the one end E1 of the measurement target optical fiber FUT connected to the optical fiber characteristics measurement device 10A, and the pump light L2 passing through the transmission optical fiber 40A and the optical circulator 50 is incident from the other end E2 of the measurement target optical fiber FUT. Further, the stimulated Brillouin scattered light BR generated within the measurement target optical fiber FUT is incident on the optical fiber characteristics measurement device 10A via the optical circulator 50 and the transmission optical fiber 40B.

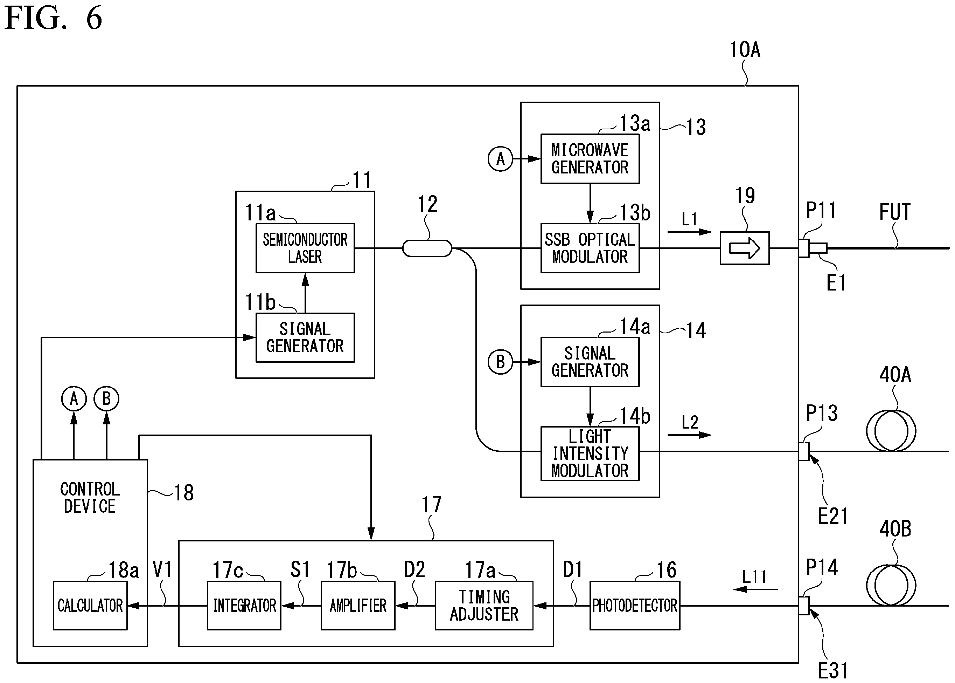

FIG. 6 is a block diagram illustrating a main configuration of the optical fiber characteristics measurement device 10A according to the second embodiment of the present invention. In FIG. 6, the same components similar to those illustrated in FIG. 3 are denoted by the same reference signs. As illustrated in FIG. 6, the optical fiber characteristics measurement device 10A in the present embodiment includes an optical isolator 19 provided between the optical modulator 13 of the optical fiber characteristics measurement device 10 illustrated in FIG. 3 and the emission port P11 (first emission port) and does not include the directional coupler 15, and the incidence and emission port P12 is divided into an emission port P13 (second emission port) and an incidence port P14.

The optical isolator 19 is provided to block the pump light L2 incident on the optical fiber characteristics measurement device 10A from the emission port P11 via the measurement target optical fiber FUT. The pulse modulator 14 is connected to the emission port P13, and the pump light L2 generated by the pulse modulator 14 is emitted from the emission port P13. The photodetector 16 is connected to the incidence port P14, and the detection light L11 incident from the incidence port P14 is detected by the photodetector 16.

The transmission optical fiber 40A is an optical fiber that guides the pump light L2 emitted from the emission port P13 of the optical fiber characteristics measurement device 10A to the other end E2 of the measurement target optical fiber FUT. In the transmission optical fiber 40A, the one end E21 is connected to the emission port P13 of the optical fiber characteristics measurement device 10A, and the other end E22 is optically coupled to the first port of the optical circulator 50. It is possible to use, for example, a single mode fiber as the transmission optical fiber 40A, as in the transmission optical fiber 20.

The transmission optical fiber 40B is an optical fiber that guides the stimulated Brillouin scattered light BR generated within the measurement target optical fiber FUT and the probe light L1 passing through the measurement target optical fiber FUT to the incidence port P14 of the optical fiber characteristics measurement device 10A. In the transmission optical fiber 40B, one end E31 is connected to the incidence port P14 of the optical fiber characteristics measurement device 10A, and the other end E32 is optically coupled to a third port of the optical circulator 50. It is possible to use, for example, a single mode fiber as the transmission optical fiber 40B, as in the transmission optical fiber 40A.

The optical circulator 50 includes the first port, the second port, and the third port, emits, from the second port, light incident from the first port, and emits, from the third port, light incident from the second port. The other end E22 of the transmission optical fiber 40A is optically coupled to the first port of the optical circulator 50, the other end E2 of the measurement target optical fiber FUT is optically coupled to the second port, and the other end E32 of the transmission optical fiber 40B is optically coupled to the third port.

The optical circulator 50 is disposed so that the optical path length from the second port of the optical circulator 50 to the other end E2 of the measurement target optical fiber FUT is smaller than the optical path length from the one end E21 of the transmission optical fiber 40A to the first port of the optical circulator 50. Further, the optical circulator 50 is disposed at the position at which the correlation peak between the probe light L1 and the pump light L2 is not generated between the second port of the optical circulator 50 and the other end E2 of the measurement target optical fiber FUT. In order to shorten the optical path length as much as possible, the other end E22 of the transmission optical fiber 40A, the other end E2 of the measurement target optical fiber FUT, and the other end E32 of the transmission optical fiber 40B may be directly connected to the first port, the second port, and the third port of the optical circulator 50, respectively.

### <Operation of optical fiber characteristics measurement system>

Next, an operation of the optical fiber characteristics measurement system 2 will be briefly described. When the optical fiber characteristics measurement device 10A is instructed to start measurement, the optical fiber characteristics measurement device 10A performs the same operation as that of the optical fiber characteristics measurement device 10 of the first embodiment. The probe light L1 is emitted from the emission port P11 of the optical fiber characteristics measurement device 10A, and the pump light L2 is emitted from the emission port P13.

The probe light L1 emitted from the emission port P11 of the optical fiber characteristics measurement device 10A is incident on the measurement target optical fiber FUT from the one end E1 of the measurement target optical fiber FUT. On the other hand, the pump light L2 emitted from the emission port P13 of the optical fiber characteristics measurement device 10A is guided to the other end E2 of the measurement target optical fiber FUT by the transmission optical fiber 40A. The pump light L2 passes through the optical circulator 50, and then, is incident on the measurement target optical fiber FUT from the other end E2 of the measurement target optical fiber FUT.

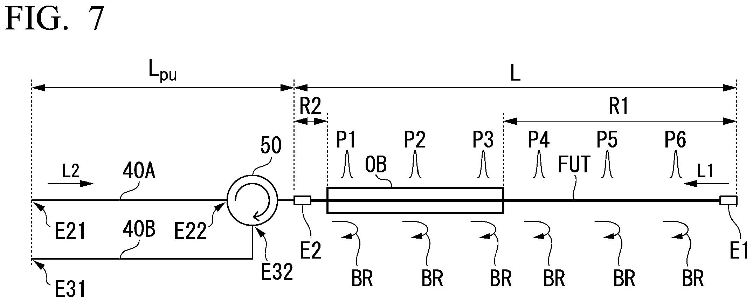

The probe light L1 passing through the measurement target optical fiber FUT and the stimulated Brillouin scattered light BR (see FIG. 7) generated within the measurement target optical fiber FUT are emitted from the other end E2 of the measurement target optical fiber FUT, and are incident on the transmission optical fiber 40B from the other end E32 of the transmission optical fiber 40B via the optical circulator 50. The probe light L1 and the stimulated Brillouin scattered light BR is guided to the incidence port P14 of the optical fiber characteristics measurement device 10A by the transmission optical fiber 40B, and are incident on the photodetector 16 as the detection light L11. The same operation as that of the optical fiber characteristics measurement device 10 of the first embodiment is performed, and the characteristic in the length direction of the measurement target optical fiber FUT is measured.

FIG. 7 is a diagram linearly illustrating, for example, an optical fiber connected to the optical fiber characteristics measurement device 10A in the second embodiment of the present invention. In FIG. 7, the same components as those illustrated in FIG. 4 are denoted by the same reference signs. The transmission optical fiber 40A and the measurement target optical fiber FUT optically coupled via the optical circulator 50 are connected between the emission port P11 and the emission port P13 of the optical fiber characteristics measurement device 10A, as illustrated in FIG. 7. The optical circulator 50 is disposed at a position as close as possible to the other end E2 (measurement target object OB) of the measurement target optical fiber FUT. Further, the transmission optical fiber 40B whose other end E32 is optically coupled to the optical circulator 50 is connected to the incidence port P14 of the optical fiber characteristics measurement device 10A, as illustrated in FIG. 7.

Specifically, as described above, the optical circulator 50 is disposed so that the optical path length from the second port of the optical circulator 50 to the other end E2 of the measurement target optical fiber FUT is smaller than the optical path length from the one end E21 of the transmission optical fiber 40A to the first port of the optical circulator 50. Further, as described above, the optical circulator 50 is disposed at the position at which the correlation peak between the probe light L1 and the pump light L2 is not generated between the second port of the optical circulator 50 and the other end E2 of the measurement target optical fiber FUT.

Here, in the measurement target optical fiber FUT, only one end E1 is connected to the optical fiber characteristics measurement device 10A, and the other end E2 is not connected to the optical fiber characteristics measurement device 10A, as in the first embodiment. The length L of the measurement target optical fiber FUT is set to be longer than half (ML/2) the maximum measurement length ML of the optical fiber characteristics measurement device 10A and smaller than the maximum measurement length ML. Therefore, when the measurement target optical fiber FUT extends in a straight line, the other end E2 of the measurement target optical fiber FUT can be disposed farther away than a position (the intermediate position HP: See FIG. 5) in which the distance from the one end E1 is half (ML/2) the maximum measurement length ML. This makes it possible to measure the measurement target object OB located farther away than the intermediate position HP. Further, because the transmission optical fiber 40A and the optical circulator 50 needs only to be provided between the other end E2 of the measurement target optical fiber FUT and the emission port P13 of the optical fiber characteristics measurement device 10A, and the transmission optical fiber 40B needs only to be provided, a great increase in cost is not caused.

Further, the pump light L2 is transmitted by the transmission optical fiber 40A and is incident on the measurement target optical fiber FUT, whereas the probe light L1 is incident on the measurement target optical fiber FUT but is not incident on the transmission optical fiber 40A.

Therefore, a period in which the pump light L2 is emitted to the measurement target optical fiber FUT may be determined in consideration of only the length L of the measurement target optical fiber FUT, similar to the first embodiment, and it is not necessary to consider a length Lₚᵤ of the transmission optical fiber 40A. Specifically, the period in which the pump light L2 is emitted to the measurement target optical fiber FUT may be a time obtained by adding a time that is twice a time width of the pump light L2 to a time required for the pump light L2 to reciprocate in the measurement target optical fiber FUT.

In the related art, it was necessary to consider a total length of the optical fiber (L + Lₚᵤ in the example illustrated in FIG. 7) connected between the emission port P11 and the emission port P13 of the optical fiber characteristics measurement device 10A. However, in the present embodiment, because only the length L of the measurement target optical fiber FUT among optical fibers connected between the emission port P11 and the incidence and emission port P13 of the optical fiber characteristics measurement device 10A needs to be considered, it is possible to shorten the measurement time as compared with the related art. In FIG. 7, sections R1 and R2 indicate sections of the measurement target optical fiber FUT on which measurement does not need to be performed.

Further, in the present embodiment, for example, a single mode fiber may be used as the transmission optical fiber 40A for transmitting the pump light L2, and it is not necessary to use the polarization holding fiber as in Japanese Patent No. 5522063. Therefore, a distance over which the pump light L2 is transmitted is not limited (for example, not limited to about 1 km) due to an influence of a polarization crosstalk (extinction ratio).

Further, in the present embodiment, in the transmission optical fiber 40A to which the pump light L2 is transmitted, correlation peaks such as the correlation peaks P1 to P6 appearing in the measurement target optical fiber FUT do not appear, and the stimulated Brillouin scattering phenomenon does not occur within the transmission optical fiber 40A, as illustrated in FIG. 7. Therefore, the pump light L2 propagating in the transmission optical fiber 40A is not attenuated by the transfer of optical power to the probe light L1 due to the stimulated Brillouin scattering phenomenon that occurs at each correlation peak. Therefore, because the optical power intensity of the pump light L2 before incidence on the measurement target optical fiber FUT does not decrease, and the decrease in the gain received by the probe light L1 at the correlation peak appearing in the measurement target optical fiber FUT can be curbed, it is possible to curb a decrease in the measurement accuracy of the temperature or distortion.

As described above, in the present embodiment, the one end E1 of the measurement target optical fiber FUT is connected to the emission port P11 of the optical fiber characteristics measurement device 10A, and the probe light L1 emitted from the emission port P11 is incident on the measurement target optical fiber FUT. Further, the one end E21 of the transmission optical fiber 40A is connected to the emission port P13 of the optical fiber characteristics measurement device 10A, and the pump light L2 emitted from the emission port P13 is guided to the other end E2 of the measurement target optical fiber FUT. Further, one end E31 of the transmission optical fiber 40B is connected to the incidence port P14 of the optical fiber characteristics measurement device 10A. The pump light L2 guided by the transmission optical fiber 40A is incident on the other end E2 of the measurement target optical fiber FUT via the optical circulator 50, and the stimulated Brillouin scattered light BR emitted from the other end E2 of the measurement target optical fiber FUT is incident on the other end E32 of the transmission optical fiber 40B via the optical circulator 50.

Thus, in the present embodiment, only the one end E1 of the measurement target optical fiber FUT to which the probe light L1 is incident may be connected to the optical fiber characteristics measurement device 10A, and it is possible to dispose the other end E2 of the measurement target optical fiber FUT to which the pump light L2 is incident, at a position separated from the optical fiber characteristics measurement device 10A. Here, the pump light L2 is guided to the other end E2 of the measurement target optical fiber FUT by the transmission optical fiber 40A, and is incident on the other end E2 of the measurement target optical fiber FUT via the optical circulator 50. Further, the Brillouin scattered light generated within the measurement target optical fiber FUT passes through the optical circulator 50, and then, is guided to the optical fiber characteristics measurement device 10A by the transmission optical fiber 40B. This makes it possible to expand the range in which the measurement target object OB can be measured as compared with the related art without causing a great increase in cost and with a simple configuration. Even when the temperature or distortion of the measurement target object OB can be measured using the related art, it is possible to shorten the measurement time by setting the length of the measurement target optical fiber FUT to a length suitable for measurement of the measurement target object OB by using the present embodiment.

### [Third embodiment]

### <Optical fiber characteristics measurement system>

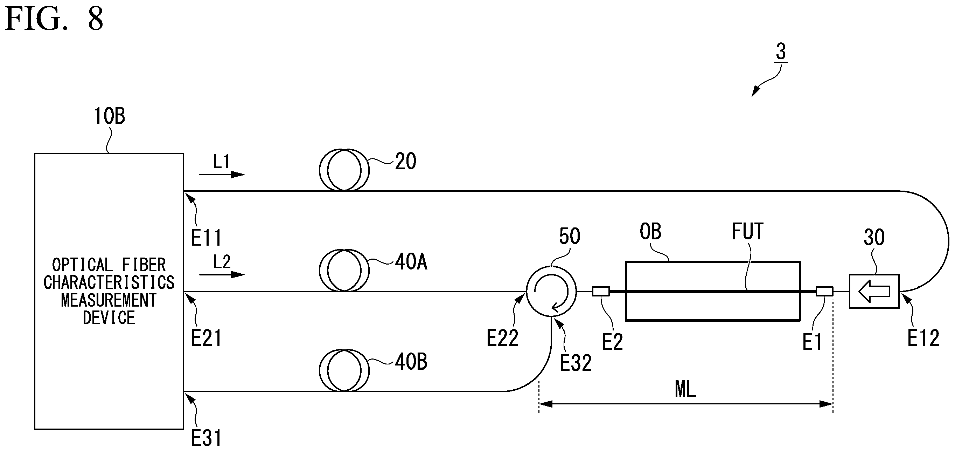

FIG. 8 is a block diagram illustrating an overall configuration of an optical fiber characteristics measurement system according to a third embodiment of the present invention. In FIG. 8, the same components similar to those illustrated in FIGS. 1 and 5 are denoted by the same reference signs. As illustrated in FIG. 8, an optical fiber characteristics measurement system 3 of the present embodiment includes an optical fiber characteristics measurement device 10B, a transmission optical fiber 20 (first optical fiber), an optical isolator 30, a transmission optical fiber 40A (second optical fiber), a transmission optical fiber 40B (third optical fiber), and an optical circulator 50. An optical directional coupler (optical coupler) may be provided instead of the optical circulator 50.

In the optical fiber characteristics measurement system 1 illustrated in FIG. 1, the pump light L2 is incident from the one end E1 of the measurement target optical fiber FUT connected to the optical fiber characteristics measurement device 10, and the probe light L1 passing through the transmission optical fiber 20 and the optical isolator 30 is incident from the other end E2 of the measurement target optical fiber FUT. The stimulated Brillouin scattered light BR generated within the measurement target optical fiber FUT is incident on the optical fiber characteristics measurement device 10 from the one end E1 of the measurement target optical fiber FUT.

Further, in the optical fiber characteristics measurement system 2 illustrated in FIG. 4, the probe light L1 is incident from the one end E1 of the measurement target optical fiber FUT connected to the optical fiber characteristics measurement device 10A, and the pump light L2 passing through the transmission optical fiber 40A and the optical circulator 50 is incident from the other end E2 of the measurement target optical fiber FUT. The stimulated Brillouin scattered light BR generated within the measurement target optical fiber FUT is incident on the optical fiber characteristics measurement device 10A via the optical circulator 50 and the transmission optical fiber 40B.

On the other hand, in the optical fiber characteristics measurement system 3 of the present embodiment, so to speak, the optical fiber characteristics measurement systems 1 and 2 are combined, and both the one end E1 and the other end E2 of the measurement target optical fiber FUT are not connected to the optical fiber characteristics measurement device 10B. That is, in the optical fiber characteristics measurement system 3, the probe light L1 passing through the transmission optical fiber 20 and the optical isolator 30 is incident from the one end E1 of the measurement target optical fiber FUT, and the pump light L2 passing through the transmission optical fiber 40A and the optical circulator 50 is incident from the other end E2 of the measurement target optical fiber FUT. Further, the stimulated Brillouin scattered light BR generated within the measurement target optical fiber FUT is incident on the optical fiber characteristics measurement device 10B via the optical circulator 50 and the transmission optical fiber 40B.

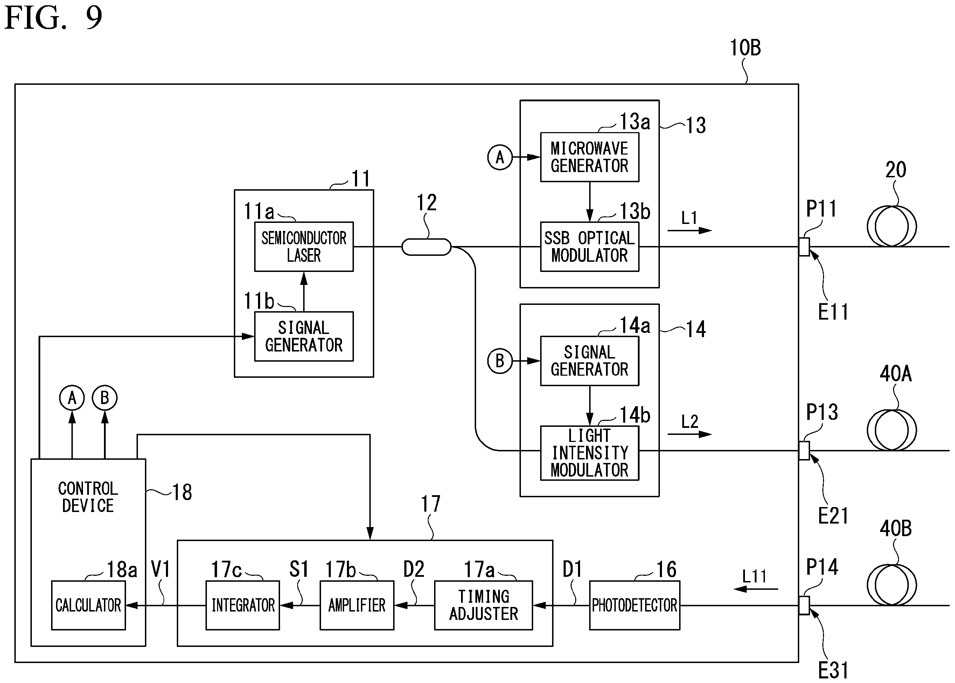

FIG. 9 is a block diagram illustrating a main configuration of the optical fiber characteristics measurement device 10B according to the third embodiment of the present invention. In FIG. 9, the same components similar to those illustrated in FIGS. 3 and 6 are denoted by the same reference signs. As illustrated in FIG. 9, the optical fiber characteristics measurement device 10B in the present embodiment has a configuration in which the optical isolator 19 of the optical fiber characteristics measurement device 10A illustrated in FIG. 5 is omitted. Therefore, the optical modulator 13 is connected to the emission port P11, and the probe light L1 generated by the optical modulator 13 is emitted from the emission port P11.

The transmission optical fiber 20 is the same as the transmission optical fiber 20 illustrated in FIG. 1, and guides the probe light L1 emitted from the emission port P11 of the optical fiber characteristics measurement device 10B to the one end E1 of the measurement target optical fiber FUT. In the transmission optical fiber 20, the one end E11 is connected to the emission port P11 of the optical fiber characteristics measurement device 10, and the other end E12 is optically coupled to the incidence end of the optical isolator 30.

The optical isolator 30 is the same as the optical isolator 30 illustrated in FIG. 1, and causes the probe light L1 guided by the transmission optical fiber 20 to be incident on the one end E1 of the measurement target optical fiber FUT. The optical isolator 30 blocks the light emitted from the one end E1 of the measurement target optical fiber FUT and directed to the transmission optical fiber 20. In the optical isolator 30, the incidence end is optically coupled to the other end E12 of the transmission optical fiber 20, and the emission end is optically coupled to the one end E1 of the measurement target optical fiber FUT.

The optical isolator 30 is disposed so that an optical path length from the emission end of the optical isolator 30 to the one end E1 of the measurement target optical fiber FUT is smaller than an optical path length from the one end E11 of the transmission optical fiber 20 to the incidence end of the optical isolator 30. Further, the optical isolator 30 is disposed at the position at which the correlation peak between the probe light L1 and the pump light L2 is not generated between the emission end of the optical isolator 30 and the one end E1 of the measurement target optical fiber FUT. In order to shorten an optical path length of the probe light L1 as much as possible, the other end E12 of the transmission optical fiber 20 may be directly connected to the incidence end of the optical isolator 30, and the one end E1 of the measurement target optical fiber FUT may be directly connected to the emission end of the optical isolator 30.

The transmission optical fiber 40A is the same as the transmission optical fiber 40A illustrated in FIG. 5, and the pump light L2 emitted from the emission port P13 of the optical fiber characteristics measurement device 10B is guided to the other end E2 of the measurement target optical fiber FUT. In the transmission optical fiber 40A, the one end E21 is connected to the emission port P13 of the optical fiber characteristics measurement device 10B, and the other end E22 is optically coupled to the first port of the optical circulator 50.

The transmission optical fiber 40B is the same as the transmission optical fiber 40B illustrated in FIG. 5, and the stimulated Brillouin scattered light BR generated within the measurement target optical fiber FUT and the probe light L1 passing through the measurement target optical fiber FUT are guided to the incidence port P14 of the optical fiber characteristics measurement device 10B. In the transmission optical fiber 40B, one end E31 is connected to the incidence port P14 of the optical fiber characteristics measurement device 10B, and the other end E32 is optically coupled to the third port of the optical circulator 50. It is possible to use, for example, a single mode fiber as the transmission optical fiber 40B, as in the transmission optical fiber 40A.

The optical circulator 50 is the same as the transmission optical fiber 40B illustrated in FIG. 5, includes the first port, the second port, and the third port, emits, from the second port, light incident from the first port, and emits, from the third port, light incident from the second port. The other end E22 of the transmission optical fiber 40A is optically coupled to the first port of the optical circulator 50, the other end E2 of the measurement target optical fiber FUT is optically coupled to the second port, and the other end E32 of the transmission optical fiber 40B is optically coupled to the third port.

The optical circulator 50 is disposed so that the optical path length from the second port of the optical circulator 50 to the other end E2 of the measurement target optical fiber FUT is smaller than the optical path length from the one end E21 of the transmission optical fiber 40A to the first port of the optical circulator 50. Further, the optical circulator 50 is disposed at the position at which the correlation peak between the probe light L1 and the pump light L2 is not generated between the second port of the optical circulator 50 and the other end E2 of the measurement target optical fiber FUT. In order to shorten the optical path length as much as possible, the other end E22 of the transmission optical fiber 40A, the other end E2 of the measurement target optical fiber FUT, and the other end E32 of the transmission optical fiber 40B may be directly connected to the first port, the second port, and the third port of the optical circulator 50, respectively.

### <Operation of optical fiber characteristics measurement system>

Next, an operation of the optical fiber characteristics measurement system 3 will be briefly described. When the optical fiber characteristics measurement device 10B is instructed to start measurement, the optical fiber characteristics measurement device 10B performs the same operation as the optical fiber characteristics measurement devices 10 and 10A of the first and second embodiments. The probe light L1 is emitted from the emission port P11 of the optical fiber characteristics measurement device 10B, and the pump light L2 is emitted from the emission port P13.

The probe light L1 emitted from the emission port P11 of the optical fiber characteristics measurement device 10B is guided to the one end E1 of the measurement target optical fiber FUT by the transmission optical fiber 20. The probe light L1 passes through the optical isolator 30, and then is incident on the measurement target optical fiber FUT from the one end E1 of the measurement target optical fiber FUT. On the other hand, the pump light L2 emitted from the emission port P13 of the optical fiber characteristics measurement device 10B is guided to the other end E2 of the measurement target optical fiber FUT by the transmission optical fiber 40A. The pump light L2 passes through the optical circulator 50, and then, is incident on the measurement target optical fiber FUT from the other end E2 of the measurement target optical fiber FUT.

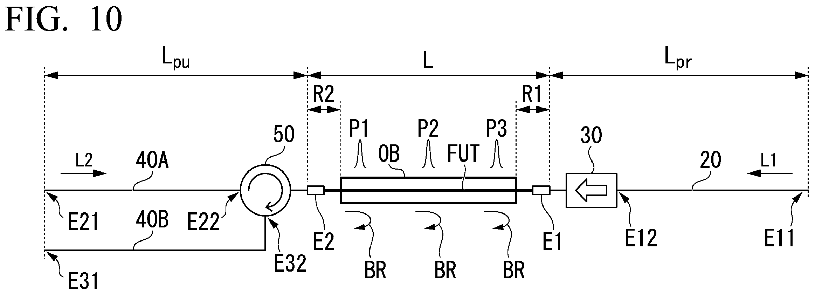

The probe light L1 passing through the measurement target optical fiber FUT and the stimulated Brillouin scattered light BR (see FIG. 10) generated within the measurement target optical fiber FUT are emitted from the other end E2 of the measurement target optical fiber FUT, and are incident on the transmission optical fiber 40B from the other end E32 of the transmission optical fiber 40B via the optical circulator 50. The light is guided to the incidence port P14 of the optical fiber characteristics measurement device 10B by the transmission optical fiber 40B, and is incident on the photodetector 16 as the detection light L11. The same operation as those of the optical fiber characteristics measurement devices 10 and 10A of the first and second embodiments is performed, and the characteristic in the length direction of the measurement target optical fiber FUT is measured.

FIG. 10 is a diagram linearly illustrating, for example, an optical fiber connected to an optical fiber characteristics measurement device 10B in the third embodiment of the present invention. In FIG. 10, the same components as those illustrated in FIGS. 4 and 7 are denoted by the same reference signs. The transmission optical fiber 20, the measurement target optical fiber FUT, and the transmission optical fiber 40A optically coupled via the optical isolator 30 and the optical circulator 50 are connected between the emission port P11 and the emission port P13 of the optical fiber characteristics measurement device 10B, as illustrated in FIG. 10.

The optical isolator 30 is disposed at a position as close as possible to the one end E1 (measurement target object OB) of the measurement target optical fiber FUT, and the optical circulator 50 is disposed at a position as close as possible to the other end E2 (measurement target object OB) of the measurement target optical fiber FUT. Further, the transmission optical fiber 40B whose other end E32 is optically coupled to the optical circulator 50 is connected to the incidence port P14 of the optical fiber characteristics measurement device 10B, as illustrated in FIG. 10.

Specifically, the optical isolator 30 is disposed so that the optical path length from the emission end of the optical isolator 30 to the one end E1 of the measurement target optical fiber FUT is smaller than an optical path length from the one end F11 of the transmission optical fiber 20 to the incidence end of the optical isolator 30, as described above. Further, the optical isolator 30 is disposed at the position at which the correlation peak between the probe light L1 and the pump light L2 is not generated between the emission end of the optical isolator 30 and the one end E1 of the measurement target optical fiber FUT, as described above.

As described above, the optical circulator 50 is disposed so that the optical path length from the second port of the optical circulator 50 to the other end E2 of the measurement target optical fiber FUT is smaller than the optical path length from the one end E21 of the transmission optical fiber 40A to the first port of the optical circulator 50. Further, as described above, the optical circulator 50 is disposed at the position at which the correlation peak between the probe light L1 and the pump light L2 is not generated between the second port of the optical circulator 50 and the other end E2 of the measurement target optical fiber FUT.

Here, in the measurement target optical fiber FUT, both the one end E1 and the other end E2 are not connected to the optical fiber characteristics measurement device 10B, unlike the first and second embodiments. Therefore, it is possible to dispose the measurement target optical fiber FUT farther away than a position at which a distance from the optical fiber characteristics measurement device 10B becomes half (ML/2) the maximum measurement length ML by increasing the lengths of the transmission optical fiber 20 and the transmission optical fiber 40A. This makes it possible to perform the measurement of the measurement target object OB of the measurement target optical fiber FUT located farther away than position at which the distance from the optical fiber characteristics measurement device 10B becomes half (ML/2) the maximum measurement length ML.

Further, it is sufficient to provide the transmission optical fiber 20 and the optical isolator 30 between the one end E1 of the measurement target optical fiber FUT and the emission port P11 of the optical fiber characteristics measurement device 10B, provide the transmission optical fiber 40A and the optical circulator 50 between the other end E2 of the measurement target optical fiber FUT and the emission port P13 of the optical fiber characteristics measurement device 10B, and further provide the transmission optical fiber 40B. Therefore, a great increase in cost is not caused.

Here, even when the length L of the measurement target optical fiber FUT is smaller than half (ML/2) the maximum measurement length ML of the optical fiber characteristics measurement device 10B, it is possible to similarly dispose the measurement target optical fiber FUT far away by increasing the lengths of the transmission optical fiber 20 and the transmission optical fiber 40A. This makes it possible to set the length of the measurement target optical fiber FUT to a shortest length suitable for the measurement of the measurement target object OB, and to greatly reduce sections of the measurement target optical fiber FUT on which measurement does not need to be performed (the sections R1 and R2 in FIG. 10). As a result, in the measurement target optical fiber FUT, because it is possible to prevent a decrease in a gain for the probe light and also prevent a decrease in the S/N ratio, it is possible to curb a decrease in the measurement accuracy of the temperature or distortion.

Further, the probe light L1 is transmitted by the transmission optical fiber 20 and is incident on the measurement target optical fiber FUT, but is not incident on the transmission optical fiber 40A. The pump light L2 is transmitted by the transmission optical fiber 40A and is incident on the measurement target optical fiber FUT, but is not incident on the transmission optical fiber 20.

Therefore, a period in which the pump light L2 is emitted to the measurement target optical fiber FUT may be determined in consideration of only the length L of the measurement target optical fiber FUT, similar to the first and second embodiments, and it is not necessary to consider a length Lₚᵣ of the transmission optical fiber 20 and a length Lₚᵤ of the transmission optical fiber 40A. Specifically, the period in which the pump light L2 is emitted to the measurement target optical fiber FUT may be a time obtained by adding a time that is twice a time width of the pump light L2 to a time required for the pump light L2 to reciprocate in the measurement target optical fiber FUT.

In the related art, it was necessary to consider a total length of the optical fiber (L + Lₚᵣ + Lₚᵤ in the example illustrated in FIG. 10) connected between the emission port P11 and the emission port P13 of the optical fiber characteristics measurement device 10B. However, in the present embodiment, because only the length L of the measurement target optical fiber FUT among optical fibers connected between the emission port P11 and the incidence and emission port P13 of the optical fiber characteristics measurement device 10B needs to be considered, it is possible to shorten the measurement time as compared with the related art. In FIG. 10, sections R1 and R2 indicate sections of the measurement target optical fiber FUT on which measurement does not need to be performed.

Further, in the present embodiment, for example, a single mode fiber may be used as the transmission optical fiber 20 for transmitting the pump light L1 and the transmission optical fiber 40A for transmitting the pump light L2, and it is not necessary to use the polarization holding fiber as in Japanese Patent No. 5522063. Therefore, the distance over which the probe light L1 and the pump light L2 are transmitted is not limited (for example, not limited to about 1 km) due to an influence of a polarization crosstalk (extinction ratio).

Further, in the present embodiment, within the transmission optical fiber 40A to which the pump light L2 is transmitted, the correlation peaks such as the correlation peaks P1 to P3 appearing in the measurement target optical fiber FUT do not appear, and the stimulated Brillouin scattering phenomenon does not occur within the transmission optical fiber 40A, as illustrated in FIG. 10. Therefore, the pump light L2 propagating in the transmission optical fiber 40A is not attenuated by the transfer of optical power to the probe light L1 due to the stimulated Brillouin scattering that occurs at each correlation peak. Therefore, because the optical power intensity of the pump light L2 before incidence on the measurement target optical fiber FUT does not decrease, and the decrease in the gain received by the probe light L1 at the correlation peak appearing in the measurement target optical fiber FUT can be curbed, it is possible to curb a decrease in the measurement accuracy of the temperature or distortion.

As described above, in the present embodiment, the one end E11 of the transmission optical fiber 20 is connected to the emission port P11 of the optical fiber characteristics measurement device 10B, and the probe light L1 emitted from the emission port P11 is guided to the one end E1 of the measurement target optical fiber FUT. Further, the one end E21 of the transmission optical fiber 40A is connected to the emission port P13 of the optical fiber characteristics measurement device 10B, and the pump light L2 emitted from the emission port P13 is guided to the other end E2 of the measurement target optical fiber FUT. Further, the one end E31 of the transmission optical fiber 40B is connected to the incidence port P14 of the optical fiber characteristics measurement device 10B. The probe light L1 guided by the transmission optical fiber 20 is incident on the one end E1 of the measurement target optical fiber FUT via the optical isolator 30. Further, the pump light L2 guided by the transmission optical fiber 40A is incident on the other end E2 of the measurement target optical fiber FUT via the optical circulator 50, and the Brillouin scattered light BR emitted from the other end E2 of the measurement target optical fiber FUT is incident on the other end E32 of the transmission optical fiber 40B via the optical circulator 50.

Thus, in the third embodiment of the present invention, because it is not necessary to connect both ends of the measurement target optical fiber FUT to the optical fiber characteristics measurement device 10B, it is possible to dispose the entire measurement target optical fiber FUT, at a position spaced apart from the optical fiber characteristics measurement device 10B. Here, the probe light L1 is guided to the one end E1 of the measurement target optical fiber FUT by the transmission optical fiber 20, and is incident on the one end E1 of the measurement target optical fiber FUT via the optical isolator 30. Here, the pump light L2 is guided to the other end E2 of the measurement target optical fiber FUT by the transmission optical fiber 40A, and is incident on the other end E2 of the measurement target optical fiber FUT via the optical circulator 50. The stimulated Brillouin scattered light BR generated within the measurement target optical fiber FUT passes through the optical circulator 50, and then, is guided to the optical fiber characteristics measurement device 10B by the transmission optical fiber 40B. This makes it possible to expand the range in which the measurement target object OB can be measured as compared with the related art without causing a great increase in cost and with a simple configuration. Even when the temperature or distortion of the measurement target object OB can be measured using the related art, it is possible to shorten the measurement time by setting the length of the measurement target optical fiber FUT to the length suitable for measurement of the measurement target object OB by using the present embodiment.

### [Modification examples of first to third embodiments]

### <First modification example>

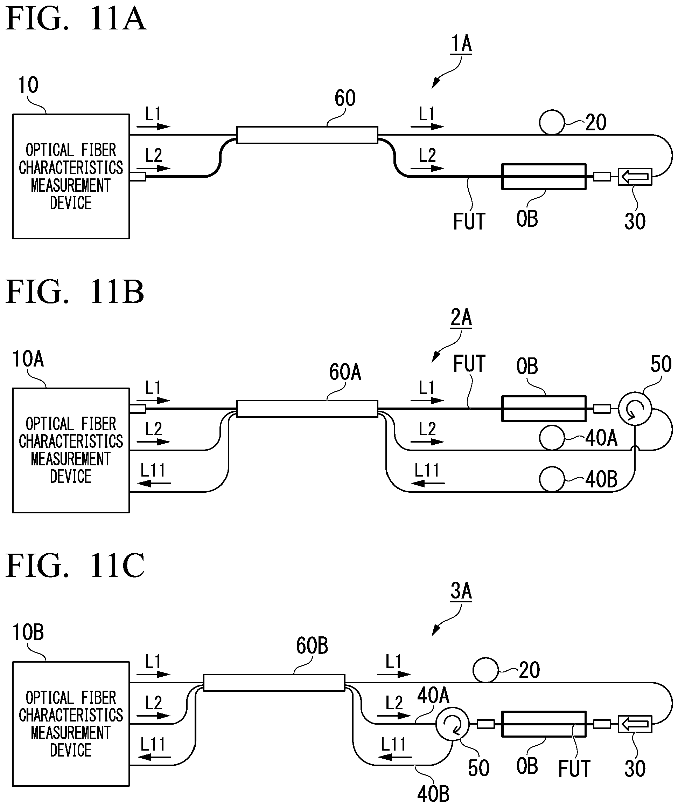

FIGS. 11A to 11C are diagrams illustrating a first modification example of the optical fiber characteristics measurement system according to the first to third embodiments of the present invention. In FIGS. 11A to 11C, the same components as those illustrated in FIGS. 1, 5, and 8 are denoted by the same reference signs.

FIG. 11A is a diagram illustrating a first modification example of the optical fiber characteristics measurement system 1 according to the first embodiment. As illustrated in FIG. 11A, in the optical fiber characteristics measurement system 1A according to the present modification example, the measurement target optical fiber FUT and the transmission optical fiber 20 are realized by a plural core fiber 60. The plural core fiber 60 includes a plurality of optical fibers (for example, two-core single-mode fibers) built therein, one of the plurality of optical fibers is used as the measurement target optical fiber FUT, and the other optical fiber is used as the transmission optical fiber 20.

FIG. 11B is a diagram illustrating a first modification example of the optical fiber characteristics measurement system 2 according to the second embodiment. As illustrated in FIG. 11B, in the optical fiber characteristics measurement system 2A according to the present modification example, the measurement target optical fiber FUT and the transmission optical fibers 40A and 40B are realized by a plural core fiber 60A. The plural core fiber 60A includes a plurality of optical fibers (for example, 4-core single-mode fibers) built therein, and one of the plurality of optical fibers is used as the measurement target optical fiber FUT. The two other optical fibers are used as the transmission optical fibers 40A and 40B. The remaining optical fiber may not be used.

FIG. 11C is a diagram illustrating a first modification example of the optical fiber characteristics measurement system 3 according to the third embodiment. As illustrated in FIG. 11C, in the optical fiber characteristics measurement system 3A according to the present modification example, the transmission optical fiber 20 and the transmission optical fibers 40A and 40B are realized by a plural core fiber 60B. The plural core fiber 60B includes a plurality of optical fibers (for example, 4-core single-mode fibers) built therein, and one of the plurality of optical fibers is used as the transmission optical fiber 20. The two other optical fibers are used as the transmission optical fibers 40A and 40B. The remaining optical fiber may not be used.

As described above, in the optical fiber characteristics measurement systems 1A, 2A, and 3A according to the first modification example, the plurality of optical fibers connected to the optical fiber characteristics measurement device 10, 10A, or 10B are realized by one plural core fiber 60, 60A, or 60B. Therefore, it is possible to reduce the number of optical fibers between the optical fiber characteristics measurement device 10, 10A, or 10B and the measurement target object OB, and to reduce a work load at the time of laying the optical fiber.

Further, because use of the plural core fibers 60, 60A, and 60B can increase allowable tension as compared with the case of use of one optical fiber, the fiber is difficult to break. Further, unused optical fibers such as the plural core fibers 60A and 60B are kept as spares, so that the spare optical fiber can be used instead of a broken optical fiber even when the measurement target optical fiber FUT or the transmission optical fibers 40A and 40B are broken. This makes it possible to restore the optical fiber at an early stage without laying a new optical fiber even when the optical fiber is broken.

Here, in the optical fiber characteristics measurement system 1A, 2A, or 3A according to the first modification example, a multi core fiber (MCF) may be used instead of the plural core fibers 60, 60A, or 60B. Here, the multi core fiber is an optical fiber in which a plurality of cores are disposed in one clad. For example, in the optical fiber characteristics measurement system 1A illustrated in FIG. 11A, one of the plurality of cores provided in the multi core fiber is used as the measurement target optical fiber FUT, and the other core is used as the transmission optical fiber 20.

Further, in the optical fiber characteristics measurement system 2A illustrated in FIG. 11B, one of the plurality of cores provided in the multi core fiber is used as the measurement target optical fiber FUT. Further, the two other cores are used as the transmission optical fibers 40A and 40B. Further, in the optical fiber characteristics measurement system 3A illustrated in FIG. 11C, one of the plurality of cores provided in the multi core fiber is used as the transmission optical fiber 20, and the two other cores are used as the transmission optical fibers 40A and 40B.

### <Second modification example>

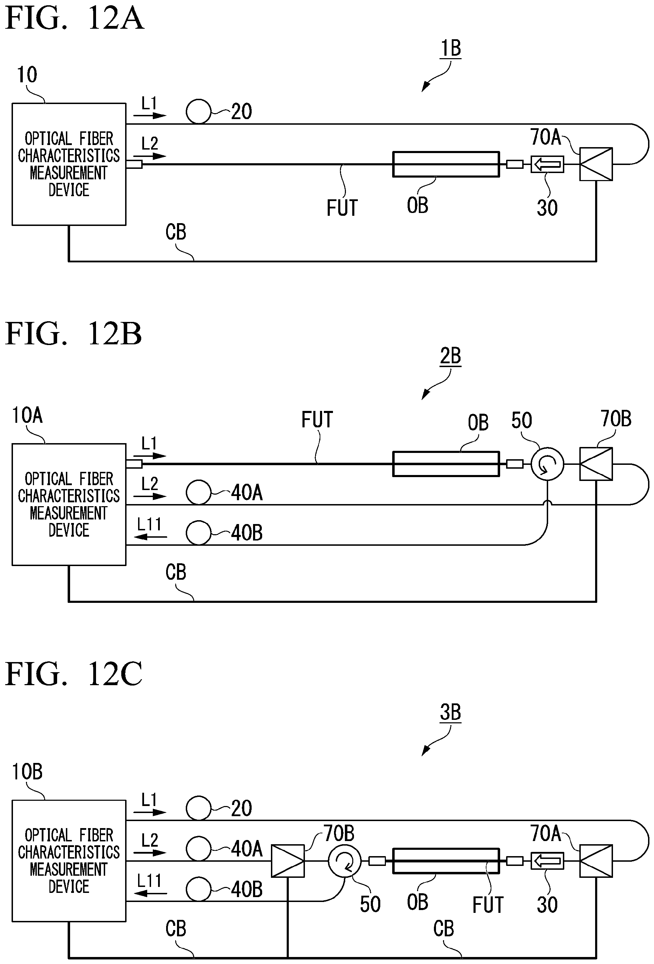

FIGS. 12A to 12C are diagrams illustrating a second modification example of the optical fiber characteristics measurement system according to the first to third embodiments of the present invention. In FIGS. 12A to 12C, the same components as those illustrated in FIGS. 1, 5, and 8 are denoted by the same reference signs.

FIG. 12A is a diagram illustrating a second modification example of the optical fiber characteristics measurement system 1 according to the first embodiment. As illustrated in FIG. 12A, the optical fiber characteristics measurement system 1B according to the present modification example includes an optical amplifier 70A provided between the transmission optical fiber 20 and the optical isolator 30 so that the probe light L1 guided by the transmission optical fiber 20 is amplified.

The optical amplifier 70A is provided to compensate for a decrease in optical power due to a transmission loss of the probe light L1 transmitted by the transmission optical fiber 20. It is possible to use, for example, an amplifier, such as an Erbium doped fiber amplifier (EDFA), as the optical amplifier 70A. The optical amplifier 70A is connected to the optical fiber characteristics measurement device 10 via a cable CB. The optical fiber characteristics measurement device 10 performs supply of power necessary for an operation of the optical amplifier 70A and transmission of a control signal to the optical amplifier 70A via the cable CB. The control signal transmitted from the optical fiber characteristics measurement device 10 is, for example, a control signal for controlling an amplification rate of the optical amplifier 70A.

FIG. 12B is a diagram illustrating a second modification example of the optical fiber characteristics measurement system 2 according to the second embodiment. As illustrated in FIG. 12B, the optical fiber characteristics measurement system 2B according to the present modification example includes an optical amplifier 70B provided between the transmission optical fiber 40A and the optical circulator 50 so that the pump light L2 guided by the transmission optical fiber 40A is amplified.

The optical amplifier 70B is provided to compensate for a decrease in optical power due to a transmission loss of the pump light L2 transmitted by the transmission optical fiber 40A. It is possible to use, for example, an amplifier such as an EDFA as the optical amplifier 70B, similar to the optical amplifier 70A. The optical amplifier 70B is connected to the optical fiber characteristics measurement device 10A via a cable CB. The optical fiber characteristics measurement device 10A performs supply of power necessary for operation of the optical amplifier 70B and transmission of a control signal to the optical amplifier 70B via the cable CB. The control signal transmitted from the optical fiber characteristics measurement device 10A is, for example, a control signal for controlling an amplification rate of the optical amplifier 70B.

FIG. 12C is a diagram illustrating a second modification example of the optical fiber characteristics measurement system 3 according to the third embodiment. As illustrated in FIG. 12C, an optical fiber characteristics measurement system 3B according to the present modification example includes an optical amplifier 70A provided between the transmission optical fiber 20 and the optical isolator 30, and an optical amplifier 70B provided between the transmission optical fiber 40A and the optical circulator 50. In such an optical fiber characteristics measurement system 3B, the probe light L1 guided by the transmission optical fiber 20 is amplified, and the pump light L2 guided by the transmission optical fiber 40A is amplified.

The optical amplifier 70A is provided to compensate for a decrease in optical power due to a transmission loss of the probe light L1 transmitted by the transmission optical fiber 20. The optical amplifier 70B is provided to compensate for a decrease in optical power due to a transmission loss of the pump light L2 transmitted by the transmission optical fiber 40A. It is possible to use, for example, an amplifier such as an EDFA as these optical amplifiers 70A and 70B. The optical amplifiers 70A and 70B are connected to the optical fiber characteristics measurement device 10B via a cable CB. The optical fiber characteristics measurement device 10B performs supply of power necessary for an operation of the optical amplifiers 70A and 70B and transmission of a control signal to the optical amplifiers 70A and 70B via the cable CB. The control signal transmitted from the optical fiber characteristics measurement device 10B is, for example, a control signal for controlling an amplification rate of the optical amplifiers 70A and 70B.

As described above, in the optical fiber characteristics measurement system 1B, 2B, or 3B according to the second modification example, the probe light L1 transmitted by the transmission optical fiber 20 and the pump light L2 transmitted by the transmission optical fiber 40A are amplified. Accordingly, a decrease in optical power due to a transmission loss of the probe light L1 transmitted by the transmission optical fiber 20 and the pump light L2 transmitted by the transmission optical fiber 40A is compensated, and the probe light L1 and the pump light L2 having an optimal power intensity are incident on the measurement target optical fiber FUT. As a result, it is possible to improve the measurement accuracy of the temperature or distortion.

Further, because the probe light L1 transmitted by the transmission optical fiber 20 and the pump light L2 transmitted by the transmission optical fiber 40A are amplified, optical power intensities of the probe light L1 and the pump light L2 emitted from the optical fiber characteristics measurement device 10, 10A, or 10B can be set to be low. This makes it possible to prevent a large attenuation (attenuation due to the stimulated Brillouin scattering phenomenon caused by an interaction with its own return light (scattered light)) that occurs when a power intensity of the pump light is high, when a power intensity of the probe light is high, or when the power intensities of both the pump light and the lobe light are high. As a result, it is possible to curb a decrease in measurement accuracy of temperature or distortion.

### <Third modification example>

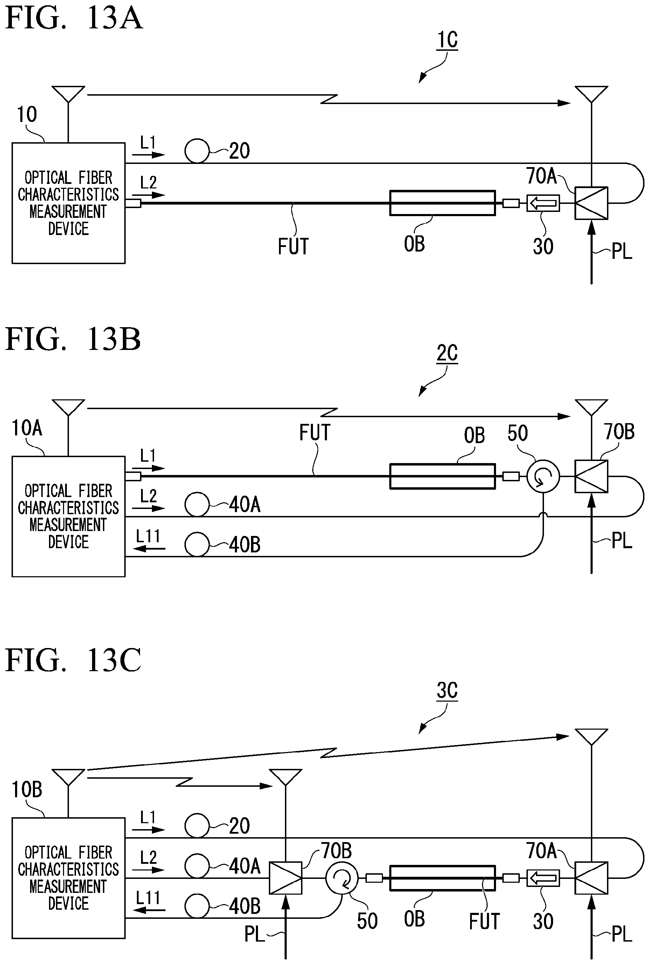

FIGS. 13A to 13C are diagrams illustrating a third modification example of the optical fiber characteristics measurement system according to the first to third embodiments of the present invention. In FIGS. 13A to 13C, the same components as those illustrated in FIGS. 1, 5, and 8 are denoted by the same reference signs.

FIG. 13A is a diagram illustrating a third modification example of the optical fiber characteristics measurement system 1 according to the first embodiment. The optical fiber characteristics measurement system 1C according to the present modification example includes an optical amplifier 70A provided between the transmission optical fiber 20 and the optical isolator 30 so that the probe light L1 guided by the transmission optical fiber 20 is amplified, similar to the optical fiber characteristics measurement system 1B illustrated in FIG. 12A.

However, the optical fiber characteristics measurement system 1C according to the present modification example differs from the optical fiber characteristics measurement system 1B illustrated in FIG. 12A in that the cable CB is omitted. In the optical fiber characteristics measurement system 1C according to the present modification example, power is supplied to the optical amplifier 70A via a power supply line PL connected to an external power supply (not illustrated) near the measurement target object OB. Further, the optical fiber characteristics measurement device 10 transmits a control signal to the optical amplifier 70A using a radio signal.

FIG. 13B is a diagram illustrating a third modification example of the optical fiber characteristics measurement system 2 according to the second embodiment. As illustrated in FIG. 13B, the optical fiber characteristics measurement system 2C according to the present modification example includes an optical amplifier 70B provided between the transmission optical fiber 40A and the optical circulator 50 so that the pump light L2 guided by the transmission optical fiber 40A is amplified, similar to the optical fiber characteristics measurement system 2B illustrated in FIG. 12B.

However, the optical fiber characteristics measurement system 2C according to the present modification example differs from the optical fiber characteristics measurement system 2B illustrated in FIG. 12B in that the cable CB is omitted. In the optical fiber characteristics measurement system 2C according to the present modification example, power is supplied to the optical amplifier 70B via a power supply line PL connected to an external power supply (not illustrated) near the measurement target object OB. Further, the optical fiber characteristics measurement device 10A transmits a control signal to the optical amplifier 70B using a radio signal.

FIG. 13C is a diagram illustrating a third modification example of the optical fiber characteristics measurement system 3 according to the third embodiment. As illustrated in FIG. 13C, the optical fiber characteristics measurement system 3C according to the present modification example includes an optical amplifier 70A provided between the transmission optical fiber 20 and the optical isolator 30, and an optical amplifier 70B provided between the transmission optical fiber 40A and the optical circulator 50, similar to the optical fiber characteristics measurement system 3B illustrated in FIG. 12C. In such an optical fiber characteristics measurement system 3C, the probe light L1 guided by the transmission optical fiber 20 is amplified, and the pump light L2 guided by the transmission optical fiber 40A is amplified.

However, the optical fiber characteristics measurement system 3C according to the present modification example differs from the optical fiber characteristics measurement system 3B illustrated in FIG. 12C in that the cable CB is omitted. In the optical fiber characteristics measurement system 3C according to the present modification example, power is supplied to the optical amplifiers 70A and 70B via a power supply line PL connected to an external power supply (not illustrated) near the measurement target object OB. Further, the optical fiber characteristics measurement device 10B transmits a control signal to the optical amplifiers 70A and 70B using a radio signal.

As described above, in the optical fiber characteristics measurement system 1C, 2C, or 3C according to the third modification example, the probe light L1 transmitted by the transmission optical fiber 20 and the pump light L2 transmitted by the transmission optical fiber 40A are amplified, similar to the optical fiber characteristics measurement system 1B, 2B, or 3B according to the second modification example. Accordingly, a decrease in optical power due to a transmission loss of the probe light L1 transmitted by the transmission optical fiber 20 and the pump light L2 transmitted by the transmission optical fiber 40A is compensated, and the probe light L1 and the pump light L2 having an optimal power intensity are incident on the measurement target optical fiber FUT. As a result, it is possible to improve the measurement accuracy of the temperature or distortion.

Further, because the probe light L1 transmitted by the transmission optical fiber 20 and the pump light L2 transmitted by the transmission optical fiber 40A are amplified, optical power intensities of the probe light L1 and the pump light L2 emitted from the optical fiber characteristics measurement device 10, 10A, or 10B can be set to be low. This makes it possible to prevent a large attenuation (attenuation due to the stimulated Brillouin scattering caused by an interaction with its own return light (scattered light)) that occurs when a power intensity of the pump light is high, when a power intensity of the probe light is high, or when the power intensities of both the pump light and the lobe light are high. As a result, it is possible to curb a decrease in measurement accuracy of temperature or distortion.

Further, power is supplied to the optical amplifiers 70A and 70B via a power supply line PL connected to an external power supply (not illustrated) near the measurement target object OB, and a control signal is transmitted to the optical amplifiers 70A and 70B from the optical fiber characteristics measurement device 10, 10A, and 10B using a radio signal. Therefore, in the present modification example, it is not necessary to lay the cable CB required in the second modification example.

The modification examples (the first to third modification examples) of the optical fiber characteristics measurement system according to the first to third embodiments described above can be appropriately combined. For example, it is possible to combine the first modification example with the second modification example, and to combine the first modification example with the third modification example. Performing such a combination makes it possible to amplify, for example, the probe light L1 and the pump light L2 transmitted by the plural core fiber (or the multi core fiber) using the optical amplifier.

### [Fourth embodiment]

### <Optical fiber characteristics measurement system>

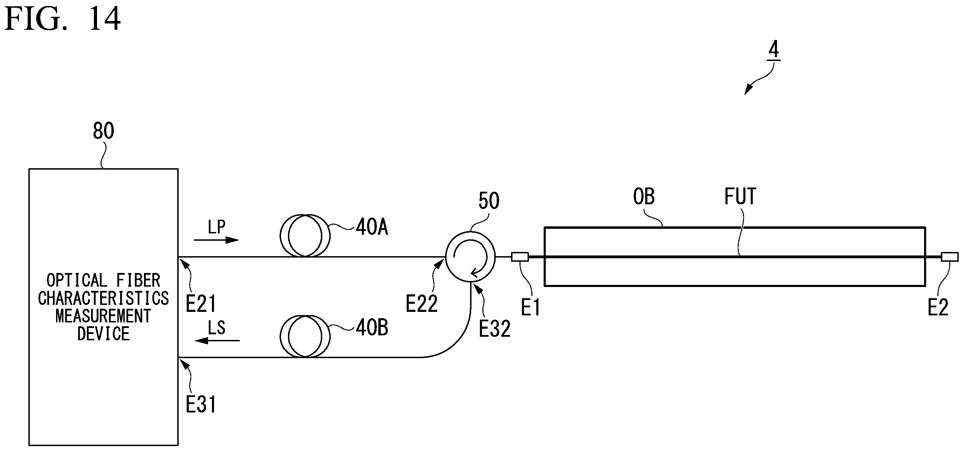

FIG. 14 is a block diagram illustrating an overall configuration of an optical fiber characteristics measurement system 4 according to a fourth embodiment of the present invention. In FIG. 14, the same components similar to those illustrated in FIGS. 5 and 8 are denoted by the same reference signs. As illustrated in FIG. 14, an optical fiber characteristics measurement system 4 of the present embodiment includes an optical fiber characteristics measurement device 80, a transmission optical fiber 40A (second optical fiber), a transmission optical fiber 40B (third optical fiber), and an optical circulator 50. An optical directional coupler (optical coupler) may be provided instead of the optical circulator 50.

The optical fiber characteristics measurement device 80 is a so-called BOCDR type optical fiber characteristics measurement device that measures the characteristics of the measurement target optical fiber FUT on the basis of natural Brillouin scattered light LS emitted from the one end E1 of the measurement target optical fiber FUT by causing the pump light LP (continuous light or pulsed light) to be incident from the one end E1 of the measurement target optical fiber FUT. The pump light LP is continuous light or pulsed light to which frequency modulation has been applied. The natural Brillouin scattered light LS is backward scattered light generated by a natural Brillouin scattering phenomenon in the measurement target optical fiber FUT. The optical fiber characteristics measurement device 80 may be a BOTDR type optical fiber characteristics measurement device. In the case of the BOTDR type, the pump light LP is pulsed light.

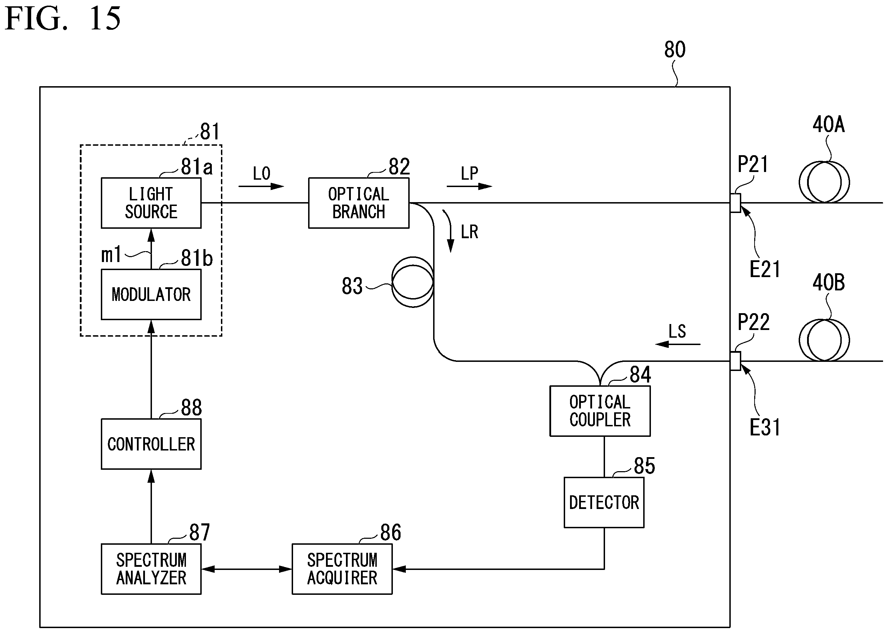

FIG. 15 is a block diagram illustrating a main configuration of the optical fiber characteristics measurement device 80 according to the fourth embodiment of the present invention. As illustrated in FIG. 15, the optical fiber characteristics measurement device 80 of the present embodiment includes a light source 81, an optical branch 82, an optical delay 83, an optical coupler 84, a detector 85, a spectrum acquirer 86, a spectrum analyzer 87, a controller 88, an emission port P21 (first port), and an incidence port P22 (second port). The optical fiber characteristics measurement device 80 illustrated in FIG. 15 emits continuous light as the pump light LP. As a device that emits the pulsed light as the pump light LP, the same device as the pulse modulator 14 illustrated in FIG. 3 is provided between the optical branch 82 and the emission port P21.

The light source 81 includes a light source 81a and a modulator 81b, and emits frequency-modulated continuous light L0 under the control of the controller 88. The light source 81a includes, for example, a semiconductor laser element such as a distributed feedback laser diode (DFB-LD: Distributed Feed-Back Laser Diode), and emits the continuous light L0 frequency-modulated according to a modulation signal m1 output from the modulator 81b. Under the control of the controller 88, the modulator 81b outputs the modulation signal m1 for frequency-modulating the continuous light L0 emitted from the light source 81a. This modulation signal m1 is, for example, a sinusoidal signal, and a frequency (the modulation frequency fm) and amplitude thereof are controlled by the controller 88.

The optical branch 82 branches the continuous light L0 emitted from the light source 81 into the pump light LP and a reference light LR at a predetermined intensity ratio (for example, 1:1). The pump light LP branched by the optical branch 82 is emitted to the outside of the optical fiber characteristics measurement device 80 via the emission port P21.

The optical delay 83 delays the reference light LR branched by the optical branch 82 by a predetermined time. The optical delay 83 includes, for example, an optical fiber having a predetermined length. It is possible to adjust the delay time by changing the length of the optical fiber. Such an optical delay 83 is provided to dispose a 0th-order correlation peak whose appearance position does not move even when the modulation frequency fm is swept, outside the measurement target optical fiber FUT. The optical delay 83 may be provided between the optical branch 82 and the emission port P21.

The optical coupler 84 couples the natural Brillouin scattered light LS generated by the measurement target optical fiber FUT that is incident from the incidence port P22 to the reference light LR emitted from the optical branch 82 and passing through the optical delay 83. Further, the optical coupler 84 branches light resulting from the coupling into two light beams at a predetermined intensity ratio (for example, 1:1) and emits the resultant light to the detector 85. Each of the two light beams branched by the optical coupler 84 contains, for example, 50% of the natural Brillouin scattered light LS from the measurement target optical fiber FUT and 50% of the reference light. It is possible to use, for example, an optical coupler as such an optical coupler 84.

The detector 85 performs optical heterodyne detection by interfering the natural Brillouin scattered light LS contained in the two lights emitted from the optical coupler 84 with the reference light LR. The detector 85 includes, for example, a balanced photodiode in which two photodiodes (PDs) are connected in series, and receives the two light beams emitted from the optical coupler 84 using the two photodiodes. A detection signal that is an interference signal (beat signal) indicating a frequency difference between the natural Brillouin scattered light LS and the reference light LR is output from the detector 85.

The spectrum acquirer 86 measures the frequency characteristics of the detection signal output from the detector 85. That is, the spectrum acquirer 86 obtains a spectrum of the natural Brillouin scattered light LS from the detection signal output from the detector 85. The spectrum acquirer 86 may include, for example, a spectrum analyzer (ESA: Electrical Spectrum Analyzer). Alternatively, the spectrum acquirer 86 includes a time axis measurer such as an oscilloscope, and a converter that performs a fast Fourier transform (FFT), and the converter may convert temporally continuous data acquired by the time axis measurer into spectral data.

The spectrum analyzer 87 measures the characteristics of the measurement target optical fiber FUT by analyzing the spectrum of the natural Brillouin scattered light LS obtained by the spectrum acquirer 86 to obtain a Brillouin frequency shift amount. The spectrum analyzer 87 may include a display that displays the obtained Brillouin frequency shift amount as physical information such as distortion or temperature. Further, information such as distortion or temperature of the measurement target optical fiber FUT may be interpreted as information indicating a state of an object that is a measurement target and displayed on the display. The display is, for example, a liquid crystal display or an organic Electro Luminescence (EL) display device.

The controller 88 performs overall control of the operation of the optical fiber characteristics measurement device 80 while referring to, for example, analysis results of the spectrum analyzer 87. For example, the controller 88 controls the modulator 81b provided in the light source 81 to change the modulation frequency fm of the continuous light L0 emitted from the light source 81. The modulation frequency fm of the continuous light L0 is changed to move the correlation peak in the length direction of the measurement target optical fiber FUT, for example. The controller 88 can be realized by a computer such as a personal computer.

The transmission optical fiber 40A is an optical fiber that guides the pump light LP emitted from the emission port P21 of the optical fiber characteristics measurement device 80 toward the one end E1 of the measurement target optical fiber FUT. In the transmission optical fiber 40A, the one end E21 is connected to the emission port P21 of the optical fiber characteristics measurement device 80, and the other end E22 is optically coupled to the first port of the optical circulator 50. It is possible to use, for example, a single mode fiber as the transmission optical fiber 40A.

The transmission optical fiber 40B is an optical fiber that guides the natural Brillouin scattered light LS generated within the measurement target optical fiber FUT to the incidence port P22 of the optical fiber characteristics measurement device 80. In the transmission optical fiber 40B, the one end E31 is connected to the incidence port P22 of the optical fiber characteristics measurement device 80, and the other end E32 is optically coupled to the third port of the optical circulator 50. It is possible to use, for example, a single mode fiber as the transmission optical fiber 40B, as in the transmission optical fiber 40A.

The optical circulator 50 includes the first port, the second port, and the third port, emits, from the second port, light incident from the first port, emits, from the third port, light incident from the second port, and emits, from the first port, the light incident from the third port. The other end E22 of the transmission optical fiber 40A is optically coupled to the first port of the optical circulator 50, the one end E1 of the measurement target optical fiber FUT is optically coupled to the second port, and the other end E32 of the transmission optical fiber 40B is optically coupled to the third port.

The optical circulator 50 is disposed so that an optical path length from the second port of the optical circulator 50 to the one end E1 of the measurement target optical fiber FUT is smaller than an optical path length from the one end E21 of the transmission optical fiber 40A to the first port of the optical circulator 50. In order to shorten the optical path length as much as possible, the other end E22 of the transmission optical fiber 40A, the one end E1 of the measurement target optical fiber FUT, and the other end E32 of the transmission optical fiber 40B may be directly connected to the first port, the second port, and the third port of the optical circulator 50.

### <Operation of optical fiber characteristics measurement system>

Next, an operation of the optical fiber characteristics measurement system 4 will be briefly described. When the optical fiber characteristics measurement device 80 is instructed to start measurement, the modulator 81b provided in the light source 81 of the optical fiber characteristics measurement device 80 is controlled by the controller 88, and the continuous light L0 frequency-modulated at the modulation frequency fm is emitted from the light source 81a.

The continuous light L0 emitted from the light source 81a is incident on the optical branch 82 and branched into the pump light LP and the reference light LR. The branched pump light LP is emitted from the emission port P21. The pump light LP emitted from the emission port P21 of the optical fiber characteristics measurement device 80 is guided to the one end E1 of the measurement target optical fiber FUT by the transmission optical fiber 40A. The pump light LP passes through the optical circulator 50, and then, is incident on the measurement target optical fiber FUT from the one end E1 of the measurement target optical fiber FUT.

When the pump light LP propagates in the measurement target optical fiber FUT, the natural Brillouin scattered light LS is sequentially generated within the measurement target optical fiber FUT. The natural Brillouin scattered light LS propagates in a direction opposite to a direction in which the pump light LP propagates, and is sequentially emitted from the one end E1 of the measurement target optical fiber FUT. The natural Brillouin scattered light LS emitted from the one end E1 of the measurement target optical fiber FUT is incident on the transmission optical fiber 40B from the other end E32 of the transmission optical fiber 40B via the optical circulator 50. The natural Brillouin scattered light LS is guided to the incidence port P22 of the optical fiber characteristics measurement device 80 by the transmission optical fiber 40B and is incident on the optical coupler 84.

The natural Brillouin scattered light LS incident on the optical coupler 84 is branched by the optical branch 82 and coupled to the reference light LR via the optical delay 83, and interference light thereof is detected by the detector 85. When the interference light is detected, a detection signal is output from the detector 85 to the spectrum acquirer 86. When this detection signal is input, the spectrum acquirer 86 performs processing of obtaining the spectrum of the natural Brillouin scattered light LS. The spectrum analyzer 87 performs processing of measuring the characteristics of the measurement target optical fiber FUT by analyzing the frequency at which the power level of the spectrum is maximized and obtaining the Brillouin frequency shift amount.

As illustrated in FIG. 14, in the present embodiment, both the one end E1 and the other end E2 of the measurement target optical fiber FUT are not connected to the optical fiber characteristics measurement device 80. Therefore, when the transmission optical fibers 40A and 40B connected to the optical fiber characteristics measurement device 80 extend to the vicinity of the measurement target object OB, it is possible to set the length of the measurement target optical fiber FUT to the shortest length suitable for the measurement of the measurement target object OB.

Therefore, a period in which the pump light LP is emitted to the measurement target optical fiber FUT may be determined in consideration of only the length L of the measurement target optical fiber FUT, similar to the first to third embodiments, and it is not necessary to consider the length of the transmission optical fiber 40A. As described above, in the present embodiment, it is possible to set the length of the measurement target optical fiber FUT to the shortest length suitable for the measurement of the measurement target object OB, and to greatly reduce the section on which measurement does not need to be performed. Therefore, it is possible to shorten the period in which the pump light LP is emitted to the measurement target optical fiber FUT, and to greatly shorten a time required for measurement of the characteristics of the measurement target optical fiber FUT.

As described above, in the present embodiment, the one end E21 of the transmission optical fiber 40A is connected to the emission port P21 of the optical fiber characteristics measurement device 80, and the pump light LP emitted from the emission port P21 is guided to the one end E1 of the measurement target optical fiber FUT. Further, the one end E31 of the transmission optical fiber 40B is connected to the incidence port P22 of the optical fiber characteristics measurement device 80. The pump light LP guided by the transmission optical fiber 40A is incident on the one end E1 of the measurement target optical fiber FUT via the optical circulator 50, and the natural Brillouin scattered light LS emitted from the one end E1 of the measurement target optical fiber FUT is incident on the other end E32 of the transmission optical fiber 40B via the optical circulator 50.

Thus, in the present embodiment, because it is not necessary to connect both the one end E1 and the other end E2 of the measurement target optical fiber FUT to the optical fiber characteristics measurement device 80, it is possible to dispose the entire measurement target optical fiber FUT, at a position spaced apart from the optical fiber characteristics measurement device 80. Here, the pump light LP is guided to the one end E1 of the measurement target optical fiber FUT by the transmission optical fiber 40A, and is incident on the one end E1 of the measurement target optical fiber FUT via the optical circulator 50. The natural Brillouin scattered light LS generated within the measurement target optical fiber FUT passes through the optical circulator 50, and then, is guided to the optical fiber characteristics measurement device 80 by the transmission optical fiber 40B. This makes it possible to expand the range in which the measurement target object can be measured as compared with the related art without causing a great increase in cost. Even when the temperature or distortion of the measurement target object OB can be measured using the related art, it is possible to shorten the measurement time by setting the length of the measurement target optical fiber FUT to a length suitable for the measurement target object OB by using the present embodiment.

Also in the fourth embodiment of the present invention, it is possible to apply the modification examples of the optical fiber characteristics measurement system according to the first to third embodiments of the present invention. For example, the transmission optical fibers 40A and 40B may be realized by one plural core fiber or one multi core fiber, as in the first modification example of the optical fiber characteristics measurement system according to the second and third embodiments. Further, the pump light LP transmitted by the transmission optical fiber 40A may be amplified, as in the second and third modification examples of the optical fiber characteristics measurement system according to the second and third embodiments.

Although the optical fiber characteristics measurement systems according to the embodiments of the present invention have been described above, the present invention is not limited to the above embodiments and can be freely changed within the scope of the present invention. For example, in the first modification example of the first to third embodiments described above, a case in which the plural core fibers 60, 60A, and 60B are, for example, 2-core or 4-core single-mode fibers has been described. However, the number of cores of the plural core fibers 60, 60A, and 60B is not limited to 2 or 4 and may be greater than 4.

As used herein, the following directional terms "front, back, above, downward, right, left, vertical, horizontal, below, transverse, row and column" as well as any other similar directional terms refer to those instructions of a device equipped with the present invention. Accordingly, these terms, as utilized to describe the present invention should be interpreted relative to a device equipped with the present invention.

The term "configured" is used to describe a component, unit or part of a device includes hardware and/or software that is constructed and/or programmed to carry out the desired function.

Moreover, terms that are expressed as "means-plus function" in the claims should include any structure that can be utilized to carry out the function of that part of the present invention.

The term "unit" is used to describe a component, unit or part of a hardware and/or software that is constructed and/or programmed to carry out the desired function. Typical examples of the hardware may include, but are not limited to, a device and a circuit.

While preferred embodiments of the present invention have been described and illustrated above, it should be understood that these are examples of the present invention and are not to be considered as limiting. Additions, omissions, substitutions, and other modifications can be made without departing from the scope of the present invention. Accordingly, the present invention is not to be considered as being limited by the foregoing description, and is only limited by the scope of the claims.

## Claims

1. An optical fiber characteristics measurement system comprising:
an optical fiber characteristics measurement device comprising:
an emission port configured to emit probe light; and
an incidence and emission port connected to one end of a measurement target optical fiber and configured to emit pump light, stimulated Brillouin scattered light generated within the measurement target optical fiber being incident on the incidence and emission port;
a first optical fiber having one end connected to the emission port and configured to guide the probe light to another end of the measurement target optical fiber; and
an optical isolator provided between another end of the first optical fiber and the another end of the measurement target optical fiber, and configured to cause the probe light guided by the first optical fiber to be incident on the another end of the measurement target optical fiber.

2. The optical fiber characteristics measurement system according to claim 1,
wherein the optical isolator is disposed so that an optical path length from the optical isolator to the another end of the measurement target optical fiber is smaller than an optical path length from the one end of the first optical fiber to the optical isolator.

3. The optical fiber characteristics measurement system according to claim 1 or 2,
wherein the optical isolator is disposed at a position at which a correlation peak between the probe light and the pump light is not generated between the optical isolator and the another end of the measurement target optical fiber.

4. The optical fiber characteristics measurement system according to any one of claims 1 to 3,
wherein the measurement target optical fiber and the first optical fiber are realized by using one plural core fiber or one multi core fiber.

5. The optical fiber characteristics measurement system according to any one of claims 1 to 4, further comprising an optical amplifier configured to amplify the probe light guided by the first optical fiber.

6. The optical fiber characteristics measurement system according to claim 5, further comprising a cable configured to connect the optical fiber characteristics measurement device to the optical amplifier,
wherein the optical fiber characteristics measurement device supplies power to the optical amplifier via the cable and transmits a control signal to the optical amplifier via the cable.

7. The optical fiber characteristics measurement system according to claim 5,
wherein power from an external power supply is supplied to the optical amplifier, and
wherein the optical fiber characteristics measurement device transmits a control signal to the optical amplifier using a radio signal.

8. An optical fiber characteristics measurement system comprising:
an optical fiber characteristics measurement device comprising:
a first emission port connected to one end of a measurement target optical fiber and configured to emit probe light;
a second emission port configured to emit pump light; and
an incidence port on which stimulated Brillouin scattered light generated within the measurement target optical fiber is incident;
a second optical fiber having one end connected to the second emission port and configured to guide the pump light toward another end of the measurement target optical fiber;
a third optical fiber having one end connected to the incidence port and configured to guide the stimulated Brillouin scattered light generated within the measurement target optical fiber to the incidence port; and
an optical circulator configured to cause the pump light guided by the second optical fiber to be incident on the another end of the measurement target optical fiber, and cause the stimulated Brillouin scattered light emitted from the another end of the measurement target optical fiber to be incident on another end of the third optical fiber.

9. The optical fiber characteristics measurement system according to claim 8,
wherein the optical circulator is disposed so that an optical path length from the optical circulator to the another end of the measurement target optical fiber is smaller than an optical path length from the one end of the second optical fiber to the optical circulator.

10. The optical fiber characteristics measurement system according to claim 8 or 9,
wherein the optical circulator is disposed at a position at which a correlation peak between the probe light and the pump light is not generated between the optical circulator and the another end of the measurement target optical fiber.

11. The optical fiber characteristics measurement system according to any one of claims 8 to 10,
wherein the measurement target optical fiber, the second optical fiber, and the third optical fiber are realized by using one plural core fiber or one multi core fiber.

12. The optical fiber characteristics measurement system according to any one of claims 8 to 11, further comprising an optical amplifier configured to amplify the pump light guided by the second optical fiber.

13. The optical fiber characteristics measurement system according to claim 12, further comprising a cable configured to connect the optical fiber characteristics measurement device to the optical amplifier,
wherein the optical fiber characteristics measurement device supplies power to the optical amplifier via the cable and transmits a control signal to the optical amplifier via the cable.

14. The optical fiber characteristics measurement system according to claim 12,
wherein power from an external power supply is supplied to the optical amplifier, and
wherein the optical fiber characteristics measurement device transmits a control signal to the optical amplifier using a radio signal.

15. An optical fiber characteristics measurement system comprising:
an optical fiber characteristics measurement device comprising:
a first emission port configured to emit probe light;
a second emission port configured to emit pump light; and
an incidence port to which stimulated Brillouin scattered light generated within a measurement target optical fiber is incident;
a first optical fiber having one end connected to the first emission port and configured to guide the probe light toward one end of the measurement target optical fiber;
an optical isolator provided between another end of the first optical fiber and one end of the measurement target optical fiber, and configured to cause the probe light guided by the first optical fiber to be incident on the one end of the measurement target optical fiber;
a second optical fiber having one end connected to the second emission port and configured to guide the pump light toward another end of the measurement target optical fiber;
a third optical fiber having one end connected to the incidence port and configured to guide stimulated Brillouin scattered light generated within the measurement target optical fiber to the incidence port; and
an optical circulator configured to cause the pump light guided by the second optical fiber to be incident on the another end of the measurement target optical fiber, and cause the stimulated Brillouin scattered light emitted from the another end of the measurement target optical fiber to be incident on another end of the third optical fiber.

16. The optical fiber characteristics measurement system according to claim 15,
wherein the optical isolator is disposed so that an optical path length from the optical isolator to the one end of the measurement target optical fiber is smaller than an optical path length from the one end of the first optical fiber to the optical isolator, and
wherein the optical circulator is disposed so that an optical path length from the optical circulator to the another end of the measurement target optical fiber is smaller than an optical path length from the one end of the second optical fiber to the optical circulator.

17. The optical fiber characteristics measurement system according to claim 15 or 16,
wherein the optical isolator is disposed at a position at which a correlation peak between the probe light and the pump light is not generated between the optical isolator and the one end of the measurement target optical fiber, and
wherein the optical circulator is disposed at a position at which a correlation peak between the probe light and the pump light is not generated between the optical circulator and the another end of the measurement target optical fiber.

18. The optical fiber characteristics measurement system according to any one of claims 15 to 17,
wherein the first optical fiber, the second optical fiber, and the third optical fiber are realized by using one plural core fiber or one multi core fiber.

19. The optical fiber characteristics measurement system according to any one of claims 15 to 18, further comprising:
a first optical amplifier configured to amplify the probe light guided by the first optical fiber; and
a second optical amplifier configured to amplify the pump light guided by the second optical fiber.

20. The optical fiber characteristics measurement system according to claim 19, further comprising a cable configured to connect the optical fiber characteristics measurement device to the first optical amplifier and the second optical amplifier,
wherein the optical fiber characteristics measurement device supplies power to the first optical amplifier and the second optical amplifier via the cable and transmits a control signal to the first optical amplifier and the second optical amplifier via the cable.

21. The optical fiber characteristics measurement system according to claim 19,
wherein power from an external power supply is supplied to the first optical amplifier and the second optical amplifier, and
wherein the optical fiber characteristics measurement device transmits a control signal to the first optical amplifier and the second optical amplifier using a radio signal.

22. The optical fiber characteristics measurement system according to any one of claims 1 to 21,
wherein both the probe light and the pump light are frequency-modulated light.

23. The optical fiber characteristics measurement system according to any one of claims 1 to 22,
wherein the probe light is continuous light, and the pump light is pulsed light.

24. An optical fiber characteristics measurement system comprising:
an optical fiber characteristics measurement device comprising:
a first port configured to emit pump light of continuous light or pulsed light; and
a second port on which natural Brillouin scattered light generated within a measurement target optical fiber is incident;
a second optical fiber having one end connected to the first port and configured to guide the pump light to one end of the measurement target optical fiber;
a third optical fiber having one end connected to the second port and configured to guide the natural Brillouin scattered light generated within the measurement target optical fiber to the second port; and
an optical circulator configured to cause the pump light guided by the second optical fiber to be incident on the one end of the measurement target optical fiber, and cause the natural Brillouin scattered light emitted from the one end of the measurement target optical fiber to be incident on another end of the third optical fiber.

25. The optical fiber characteristics measurement system according to claim 24,
wherein the optical circulator is disposed so that an optical path length from the optical circulator to the one end of the measurement target optical fiber is smaller than an optical path length from the one end of the second optical fiber to the optical circulator.
